(19) **Europäisches Patentamt / European Patent Office / Office européen des brevets**

(11) **EP 4 131 762 B1**

(12) **EUROPEAN PATENT SPECIFICATION**

(45) Date of publication and mention
of the grant of the patent:
**04.06.2025   Bulletin 2025/23**

(21) Application number: **20928166.6**

(22) Date of filing: **15.07.2020**

(51) International Patent Classification (IPC):
$H02M\ 5/297$ (2006.01)   $H02M\ 7/483$ (2007.01)
$H02M\ 5/42$ (2006.01)   $B60M\ 3/00$ (2006.01)

(52) Cooperative Patent Classification (CPC):
**H02M 5/42; B60M 3/00; H02M 5/297;**
**H02M 7/4835;** H02M 1/0083

(86) International application number:
**PCT/CN2020/102122**

(87) International publication number:
**WO 2021/196448 (07.10.2021 Gazette 2021/40)**

(54) **INTERCONNECTED CO-PHASE TRACTION POWER SUPPLY SYSTEM BASED ON FOUR-PORT MODULAR MULTILEVEL CONVERTER**

VERBUNDENES GLEICHPHASIGES TRAKTIONSSTROMVERSORGUNGSSYSTEM AUF BASIS EINES MODULAREN MEHRSTUFIGEN VIERPORT-WANDLERS

SYSTÈME D'ALIMENTATION EN ÉNERGIE DE TRACTION CO-PHASÉ INTERCONNECTÉ FONDÉ SUR UN CONVERTISSEUR MULTINIVEAU MODULAIRE À QUATRE PORTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2020   CN 202010261430**

(43) Date of publication of application:
**08.02.2023   Bulletin 2023/06**

(73) Proprietors:
• **China Railway Electrification Bureau (Group) Co., Ltd.**
**Beijing 100036 (CN)**
• **Tsinghua University**
**Beijing 100084 (CN)**
• **China Railway Electrical Industry Co., Ltd.**
**Baoding, Hebei 071000 (CN)**

(72) Inventors:
• **LIN, Yunzhi**
**Beijing 100036 (CN)**
• **WEI, Yingdong**
**Beijing 100084 (CN)**
• **LI, Zengqin**
**Baoding, Hebei 071000 (CN)**

• **LI, Xiaoqian**
**Beijing 100084 (CN)**
• **LI, Mingrui**
**Beijing 100084 (CN)**
• **ZHANG, Shuqing**
**Beijing 100084 (CN)**
• **LU, Chao**
**Beijing 100084 (CN)**
• **XIE, Xiaorong**
**Beijing 100084 (CN)**

(74) Representative: **Manna, Sara et al**
**Società Italiana Brevetti S.p.A.**
**Piazza di Pietra, 39**
**00186 Roma (IT)**

(56) References cited:
**CN-A- 103 552 487      CN-A- 103 972 920**
**CN-A- 105 470 958      CN-A- 108 400 715**
**CN-A- 109 050 352      CN-A- 109 728 592**
**JP-A- 2016 123 159**

**(Cont. next page)**

- ZHAO YANLING ET AL: "Some Key Problems on Cophase Traction Power Supply Device", INFORMATION TECHNOLOGY AND APPLICATIONS (IFITA), 2010 INTERNATIONAL FORUM ON, IEEE, PISCATAWAY, NJ, USA, 16 July 2010 (2010-07-16), pages 444 - 449, XP031801216, ISBN: 978-1-4244-7621-3
- HE XIAOQIONG ET AL: "Advanced Cophase Traction Power Supply System Based on Three-Phase to Single-Phase Converter", IEEE TRANSACTIONS ON POWER ELECTRONICS, INSTITUTE OF ELECTRICAL AND ELECTRONICS ENGINEERS, USA, vol. 29, no. 10, 1 October 2014 (2014-10-01), pages 5323 - 5333, XP011550003, ISSN: 0885-8993, [retrieved on 20140602], DOI: 10.1109/TPEL.2013.2292612
- HE XIAOQIONG ET AL: "A Novel Advanced Traction Power Supply System Based on Modular Multilevel Converter", IEEE ACCESS, vol. 7, 23 October 2019 (2019-10-23), pages 165018 - 165028, XP011757402, DOI: 10.1109/ACCESS.2019.2949099
- CHANG, FEI : "Research on Cascaded H-bridge Structure for a New Traction Power Supply System", POWER ELECTRONICS, vol. 38, no. 12, 31 December 2016 (2016-12-31), CN , pages 92 - 93, 96, XP009531058, ISSN: 1000-100X

**Description**

CROSS-REFERENCE TO RELATED APPLICATIONS

This application claims a priority to Chinese Patent Application No. 202010261430.4, filed on April 04, 2020 by TSINGHUA UNIVERSITY, titled "INTERCONNECTED CO-PHASE TRACTION POWER SUPPLY SYSTEM BASED ON FOUR-PORT MODULAR MULTILEVEL CONVERTER".

TECHNICAL FIELD

The present disclosure relates to a continuous co-phase traction power supply system, a traction substation and a power conversion apparatus thereof, in particular to a continuous co-phase traction power supply system based on a four-port modular multilevel converter.

BACKGROUND

A railway (rail transit) traction power supply system is an energy inlet of an electric railway and urban rail transit system, which is critical to safety, stability and economy of operation s of the electric railway and urban rail transit system. The traction power supply system of high-speed, heavy haul railways and intercity rapid rail transit in China adopts a type of "single-phase 50Hz AC unilateral power supplying", and sets a death zone of a "neutral section" every 10~30km, resulting in problems of "being hit in the throat", such as, a great increase in a probability of traveling failure, a decrease in a travel speed of high-speed railways, a decrease in an efficiency of heavy haul transportation, and locomotives being broken down. In addition, it faces many serious power quality problems that affect a public power grid, as well as chronic problems such as insufficient utilization of renewable energy of traction locomotives, low utilization rate of traction variable capacity, and a limitation to reliability of the overall system. The "neutral section" of the existing traction power supply type has always restricted safe, reliable, efficient and high-quality operation of the electric railway in China. A core to solve the problems is a co-phase traction power supply technology.

The co-phase traction power supply technology can be classified into three categories, such as, a quasi co-phase traction power supply technology, a virtual co-phase traction power supply technology, and a continuous co-phase traction power supply technology.

The quasi co-phase traction power supply technology is a form of unilateral traction power supplying, which supplies power to an overhead contact system through a single port of a single-phase traction transformer or other traction transformers used in a traction substation, and compensates for unbalanced power flow of the traction substation cooperating with active apparatuses, for example, a co-phase traction power supply system for high-speed electric railway proposed in Patent 1 (Application No. ZL201611056799.1) and a single-phase combined co-phase power supply and transformation structure proposed in Patent 2 (Application No. 201310227591.1). The quasi co-phase traction power supply technology cancels the neutral section in the traction substation. However, since a bus voltage of the traction substation cannot be directly controlled, canceling the neutral section in a section post will form a low-voltage loop network and cause a circulating current. This technology is not a complete co-phase power supply technology due to the fact that the neutral section has to retain in the section post, thus called the quasi co-phase traction power supply technology.

The virtual co-phase traction power supply technology uses active apparatuses to directly control voltages of no-electricity zones of the neutral sections in the traction substation and the section post both, which may enable the locomotive uninterruptedly passing the neutral sections of the whole overhead contact system on the basis of not changing the form of power supplying of the existing traction power supply system, for example, an uninterruptible flexible connector and compensator apparatus for an neutral section of a traction system and a method thereof proposed in Patent 3 (Application No. ZL201010596433. X), an uninterruptible neutral section passing and power quality comprehensive compensation apparatus for an electric locomotive and a method thereof proposed in Patent 4 (Application No. ZL201010597237.4), and an uninterruptible flexible neutral section device of a section post and a control method thereof proposed in Patent 5 (Application No. 201811313066.0). The virtual co-phase traction power supply technology may better solve the problem of the locomotive passing the neutral section. However, the virtual co-phase traction power supply technology still belongs to the form of unilateral traction power supplying, and inherits disadvantages of the form of unilateral power supplying, including a limitation to capability and reliability of power supplying, an influence between short circuit fault and power quality each other, large voltage fluctuation at each section of the overhead contact system, insufficient utilization of regenerative energy of a traction locomotive, a low utilization rate of a capacity of the traction transformer, and a limitation to reliability of the overall system, and other chronic problems.

The continuous co-phase traction power supply technology is a form of bilateral traction power supplying. The technology mainly relies on an AC to AC conversion of a static power converter to realize a power conversion between three-phase external power grid and single-phase traction power grid, and may have the following basic characteristics.

1) The technology may completely cancel the neutral section, and realize genuine co-phase power supplying, and without an operation of neutral section passing during a whole process of the locomotive running in the overhead contact system, which is safe and reliable, and without speed loss.

2) The technology may ensure three-phase system equilibrium of the external power supply system, and without dynamic reactive compensation, and reach a harmonic standard.

3) The technology may completely decouple the three-phase power grid and the traction system, with little influence on each other, and have a strong ability of grid fault ride through.

4) The technology may have a high utilization rate of the capacity of the traction transformer, and reduce a fixed capacity and operation cost of the traction substation.

5) The technology may have a low requirement on an external source short circuit capacity, reduce cost of switching equipment, and have strong adaptability of the power grid.

6) The technology may realize the bilateral power supplying, and have a high capability of power supplying, and beneficial for increasing a distance between the traction substations, stabilizing the voltage of the overhead contact system, and effectively improving reliability of the power supplying.

7) The technology may limit a fault current of the traction system, and rapidly limit a current in case of short circuit of the overhead contact system within a rated value, and reduce cost of grounding and connecting mechanisms.

8) The technology may reduce braking energy fed back to the three-phase system in a controllable way, make full use of the braking energy, and save traction energy by 10%~20%.

Core equipment for realizing the continuous co-phase traction power supply technology is a three-phase/single-phase static power converter (SPC), topology implementation of which may include the following typical ways.

1) Taking ABB, GE, and other companies as representative, a solution of three-phase AC to DC to single-phase AC conversion based on three-level is adopted. Converters on both sides coupled with each other through a common DC link may perform contravariant with a mode of single-phase transformer series multiple, to reduce harmonics of an output voltage, and have a typical model of PCS-6000 Rail. Due to fewer levels and limited equivalent switching frequency, the solution requires complex multiple transformers to reduce a characteristic frequency, and complex winding of the transformers, has large AC voltage and current harmonics, a high requirement on a device capacity, low efficiency, and needs a larger filter.

2) Patent 6 (Application No.: ZL200710175253.2) proposes a single-phase unified power quality controller for electric railway power supply, which is a single-phase AC to DC to single-phase AC unified power quality controller. The solution may construct cascaded multilevel output on an inverter side using multilevel independent DC links, which may have better harmonic characteristics of output voltage. Similarly, Reference 1 (I. Krastev, P. Tricoli, S. Hillmansen and M. Chen, "Future of Electric Railways: Advanced Electrification Systems with Static Converters for ac Railways," in IEEE Electrification Magazine, vol. 4, no. 3, pp. 6-14, Sept. 2016.) describes a similar structure, with a difference that each power unit on a rectification side is a three-phase rectifier. The solution has the problem of arranging more complex and expensive multiple transformers.

3) Taking Siemens as representative, a modular multilevel AC to AC direct converter (MMDC) technology is adopted, which is better solve the problem of the technical solution of ABB and GE. The modular multilevel cascade manner of a plurality of H-bridges may improve both a harmonic characteristic and an efficiency of the SPC and eliminate the complex transformer structure. However, the MMDC technology of Siemens requires that only when grid frequencies at input and output sides of the SPC are different, the power flow of the input and output sides may be decoupled from each other, which is not suitable for a 50Hz/50Hz application scenario.

4) Reference 2 (Winkelnkemper M, Korn A, Steimer P. A modular direct converter for transformerless rail interties [A]. IEEE International Symposium on Industrial Electronics [C].2010. 562-567.) describes a AC to DC to AC modular multilevel converter SPC, which is composed of a three-phase MMC converter and a single-phase MMC converter interconnected through a DC side. The solution, by using a multilevel technology, obtains good harmonic characteristics at ports of a three-phase power grid and a single-phase traction system, decouples AC frequencies of input and output ports from each other, which is suitable for different scenarios. However, the solution has disadvantages of many bridge arms, insufficient utilization of switching power apparatuses and high overall cost.

## SUMMARY

An objective of the present disclosure is to solve the problem existing in the existing three-phase/single-phase static power converter with the converter topology of AC to AC conversion, and to construct a continuous co-phase traction substation and a continuous co-phase traction power supply system with economic advantages and excellent characteristics.

To achieve the above objective, the present disclosure provides the following solution.

The present disclosure provides a continuous co-phase traction power supply system based on a four-port modular multilevel converter, including a plurality of continuous co-phase traction substations arranged at intervals. A source side of each continuous co-phase traction substation is connected to a same synchronous public AC power grid, and a traction bus at a load side of each continuous co-phase traction substation is connected to an overhead contact system T, all continuous co-phase traction substations are connected with each other through the overhead contact system T.

Each continuous co-phase traction substation includes a first traction transformer $T_1$, a second traction transformer $T_2$, a plurality of switches and a static power converter SPC with three input ports Ac, Bc, Cc and one output port Xc; the first traction transformer $T_1$ and the second traction transformer $T_2$ each has a three-phase transformer structure; primary ports of respective phases of the first traction transformer $T_1$ and the second traction transformer $T_2$ are respectively connected to three phases A, B and C of the synchronous public AC power grid through three-phase circuit breakers CB1, CB2, in which the phase A is ahead of the phase B by 120 degrees and the phase A lags behind the phase C by 120 degrees, secondary ports of respective phases of the first traction transformer $T_1$ and the second traction transformer $T_2$ are respectively connected to three input ports Ac, Bc and Cc of the static power converter SPC through three-phase circuit breakers CB6 and CB7, an output port Xc of the static power converter is connected to a traction bus T-bus, the traction bus T-bus is connected to the overhead contact system T through a single-phase circuit breaker CB3, and a rail is connected to a concentrated grounding terminal of the corresponding continuous co-phase traction substation through a return line. The concentrated grounding terminal of the continuous co-phase traction substation is connected with one input port of the static power converter SPC, and the input port of the static power converter SPC connected to the concentrated grounding terminal in each continuous co-phase traction substation has a same phase sequence number; the static power converter SPC includes k four-port modular multilevel converters 4P-MMC in parallel, each four-port modular multilevel converter 4P-MMC includes four phases A, B, C and X each including an upper bridge arm and a lower bridge arm in series, positive terminals of the upper bridge arms of the four phases are connected in parallel with each other to form a DC positive pole DC+, and negative poles of the lower bridge arms of the four phases are connected in parallel with each other to form a DC negative pole DC-, negative terminals of the upper bridge arms of the four phases and positive terminals of the lower bridge arms of the four phases are respectively connected in series as midpoints of respective phases; the midpoints of three phases A, B, and C of each four-port modular multilevel converter 4P-MMC are respectively connected to the corresponding input ports Ac, Bc and Cc of the static power converter SPC through a three-phase circuit breaker TB, and the midpoint of the phase X of each four-port modular multilevel converter 4P-MMC are respectively connected to the output port Xc of the static power converter SPC through a single-phase circuit breaker SB.

The primary ports of the first traction transformer $T_1$ and the second traction transformer $T_2$ have a same effective value $U_L$ of rated line voltage, and phase angles of line voltages with a difference of 120 degrees in sequence; the secondary ports of the first traction transformer $T_1$ and the second traction transformer $T_2$ are with a same effective value $U_l$ of rated line voltage, and phase angles of line voltages with a difference of 120 degrees in sequence; a transformation ratio of each of the first traction transformer $T_1$ and the second traction transformer $T_2$ is $K_T$, which is:

$$K_T = U_l / U_L .$$

Further, each continuous co-phase traction substation includes a single-phase output transformer $T_o$, one port $P_1$ of a primary winding of the single-phase output transformer $T_o$ is connected to the output port Xc of the static power converter SPC in the corresponding continuous co-phase traction substation, any input port of the static power converter SPC is connected to the other port $P_0$ of the primary winding of the single-phase output transformer $T_o$ through a circuit breaker CB4, and the input port of the static power converter SPC connected to the port $P_0$ of the primary winding of the single-phase output transformer $T_o$ in each continuous co-phase traction substation has a same phase sequence number; one port $S_1$ of a secondary winding of the single-phase output transformer $T_o$ is connected to the traction bus T-bus through a single-phase circuit breaker CB5, and the other port $S_0$ of the secondary winding of the single-phase output transformer $T_o$ is connected to the concentrated grounding terminal in the corresponding continuous co-phase traction substation; a secondary-side rated voltage of the single-phase output transformer $T_o$ and a rated voltage of the traction bus T-bus are the same, an effective value of which is denoted as $U_o$, a primary-side rated voltage of the single-phase output transformer $T_o$ and a port voltage of the output port Xc of the corresponding static power converter SPC are the same, and an effective value of which is denoted as $U_x$, a transformation ratio $K_o$ of the single-phase output transformer $T_o$ is:

$$K_o = U_o / U_x .$$

Further, in each phase of the four-port modular multilevel converter 4P-MMC, the upper bridge arm and the lower bridge arm have a same structure, including a plurality of voltage source submodules and a filtering inductor in series; in the upper bridge arm, a positive terminal of a first one of the voltage source submodules and one terminal of the filtering inductor are taken as a positive terminal and a negative terminal of the upper bridge arm respectively; in the lower bridge arm, one terminal of the filtering inductor and a negative terminal of a last one of the voltage source submodules are taken as a positive terminal and a negative terminal of the lower bridge arm respectively.

The continuous co-phase traction power supply system provided in the present disclosure has the following characteristics and beneficial effects.

1) The continuous traction substation in the system of the present disclosure adopts the conventional three-phase transformer having advantages of simple wiring, low cost and high capacity utilization, rather than a traction transformer with a special wiring form.

2) The SPC includes the plurality of 4P-MMCs running in parallel, and failure exit of some 4P-MMCs will not affect operations of the SPC and the continuous co-phase traction substation. The system has high operation reliability. Two traction transformers may operate in parallel, and failure of a single transformer will not affect a normal operation of the continuous co-phase traction substation.

3) The proposed four-port modular multilevel converter 4P-MMC forms the static power converter SPC of the core equipment of the continuous co-phase traction substation in the system of the present disclosure. The advantages of the 4P-MMC include, compared with the solution of ABB and GE, avoiding filters with a large capacity at the AC ports and the transformers with complex wiring at three-phase AC and single-phase AC sides, significantly improving efficiency of the system and reducing costs of the system. Compared with the solutions described in Patent 6 and Reference 1, the 4P-MMC avoids the use of complex multiple transformers on the rectification side, saves corresponding costs, and improves the overall efficiency. Compared with the MMDC technology of Siemens, the 4P-MMC solves the problem of not adapting to the application scenario where the input and output AC systems are of the same frequency. Compared with the solution of the five-port AC to DC to AC MMC described in Reference 2, the 4P-MMC can reduce the cost of the power elements and capacitors by 35% overall due to the elimination of one port and corresponding bridge arm and the reduction of current stress on one input port, while maintaining the excellent characteristics of the AC harmonic on both sides and the decoupling of input and output frequencies, which has strong economic advantages and high capacity utilization.

4) The present disclosure cancels the neutral sections of the whole lines of the overhead contact system, and relies on the converters at the input ports of the SPC to effectively control the power quality of the external public power grid, and effectively limits the fault current of the overhead contact system.

Additional aspects and advantages of embodiments of present disclosure will be given in part in the following descriptions, become apparent in part from the following descriptions, or be learned from the practice of the embodiments of the present disclosure.

## BRIEF DESCRIPTION OF THE DRAWINGS

These and other aspects and advantages of embodiments of the present disclosure will become apparent and more readily appreciated from the following descriptions made with reference to the drawings, in which:

FIG.1 is a schematic diagram of an overall structure of a continuous co-phase traction power supply system according to an embodiment of the present disclosure.

FIG.2 is a schematic diagram of a structure of a continuous co-phase traction substation without an output transformer according to an embodiment of the present disclosure.

FIG.3 is a schematic diagram of a structure of a continuous co-phase traction substation with an output transformer according to an embodiment of the present disclosure.

FIG.4 is a schematic diagram of a structure an ith four-port modular multilevel converter $4P\text{-}MMC_i$ in a static power converter SPC according to an embodiment of the present disclosure.

FIG.5 is a schematic diagram of a structure of upper and lower bridge arms of each phase for forming a four-port modular multilevel converter 4P-MMC according to an embodiment of the present disclosure, where FIG. 5 (a) is a schematic diagram of a structure of an upper bridge arm, FIG. 5 (b) is a schematic diagram of a structure of a lower bridge arm.

FIG.6 is a schematic diagram of a structure of a voltage source submodule for forming a bridge arm of each phase of a 4P-MMC according to an embodiment of the present disclosure.

FIG.7 is a schematic diagram of a voltage phasor of a static power converter SPC according to an embodiment of the present disclosure.

FIG.8 is a schematic diagram of an electrical structure and key electrical quantities of a static power converter SPC (k=1) according to an embodiment of the present disclosure.

FIG.9 is a schematic diagram of a structure of a continuous co-phase traction substation with power supply capability after a SPC is out of service according to an embodiment of the present disclosure.

## DETAILED DESCRIPTION

Reference will be made in detail to embodiments of the present disclosure. Examples of the embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

A continuous co-phase traction power supply system based on a four-port modular multilevel converter according to the embodiments of the present disclosure are described with reference to the accompany drawings.

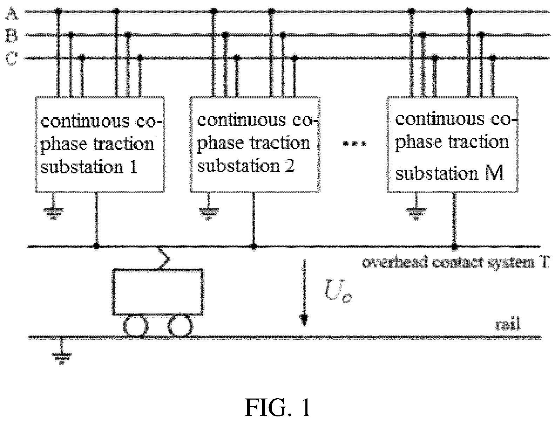

FIG.1 illustrates a continuous co-phase traction power supply system based on a four-port modular multilevel converter according to an embodiment of the present disclosure.

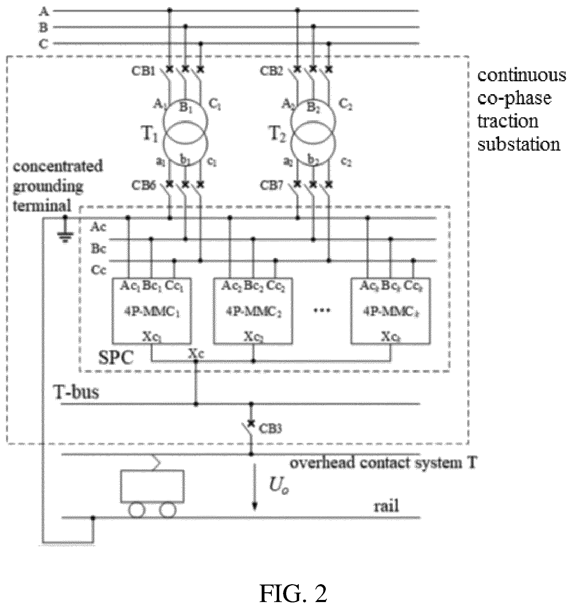

As illustrated in FIG. 1, the continuous co-phase traction power supply system based on the four-port modular multilevel converter may include $M$ continuous co-phase traction substations ($M$ is generally a positive integer greater than 1) spaced at a certain distance (generally 2km~60km). In the present disclosure, the external public power grid connected to a source side of each of the $M$ continuous co-phase traction substations shall belongs to a synchronous AC power grid, and a traction bus T-bus at a load side of each of the M continuous co-phase traction substations is connected to an overhead contact system T, and all traction substations on the load side are connected with each other, and the traction power supply system has no neutral section setting on the whole lines. FIG. 2 illustrates a continuous co-phase traction substation in an embodiment of the present disclosure, including a first traction transformer $T_1$ with three-phase conventional wiring, a second traction transformer $T_2$ with three-phase conventional wiring, a set of static power converter SPC composed of one or more four-port modular multilevel converters 4P-MMC in parallel, and a plurality of switches. The first traction transformer $T_1$ includes primary ports $A_1$, $B_1$, $C_1$ and secondary ports $a_1$, $b_1$, $c_1$. The second traction transformer $T_2$ includes primary ports $A_2$, $B_2$, $C_2$ and secondary ports $a_2$, $b_2$, $c_2$. The static power converter SPC includes three input ports Ac, Bc, Cc and one output port Xc. The switches include three-phase circuit breakers CB1, CB2, CB6, CB7 and a single-phase circuit breaker CB3. A, B, C are used to indicate respective phase sequences of three phases of the public AC power grid. The phase A is ahead of the phase B by 120 degrees, and the phase A lags behind the phase C by 120 degrees. A connection relationship of respective elements in the continuous co-phase traction substation is as follows. The primary ports $A_1$, $B_1$, $C_1$ of the first traction transformer $T_1$ are respectively connected to three phases A, B and C of the synchronous public AC power grid through the three-phase circuit breaker CB1. The secondary ports $a_1$, $b_1$, $c_1$ of the first traction transformer $T_1$ are respectively connected to the three input ports Ac, Bc and Cc of the static power converter SPC through the three-phase circuit breaker CB6. The primary ports $A_2$, $B_2$, $C_2$ of the second traction transformer $T_2$ are respectively connected to three phases A, B and C of the synchronous public AC power grid through the three-phase circuit breaker CB2. The secondary ports $a_2$, $b_2$, $c_2$ of the second traction transformer $T_2$ are respectively connected to the three input ports Ac, Bc and Cc of the static power converter SPC through the three-phase circuit breaker CB7. The output port Xc of the static power converter SPC is connected to the traction bus T-bus. The traction bus T-bus is connected to the overhead contact system T through the single-phase circuit breaker CB3. A rail is connected to a concentrated grounding terminal of the corresponding traction substation through a return line, and the concentrated grounding terminal is connected to a ground grid.

One of three input ports Ac, Bc and Cc of the SPC is selected to connect with the concentrated grounding terminal of the traction substation. The port Ac in FIG. 2 is connected with the concentrated grounding terminal. And the input port of the SPC connected to the concentrated grounding terminal in each of the M continuous co-phase traction substations has a same phase sequence number.

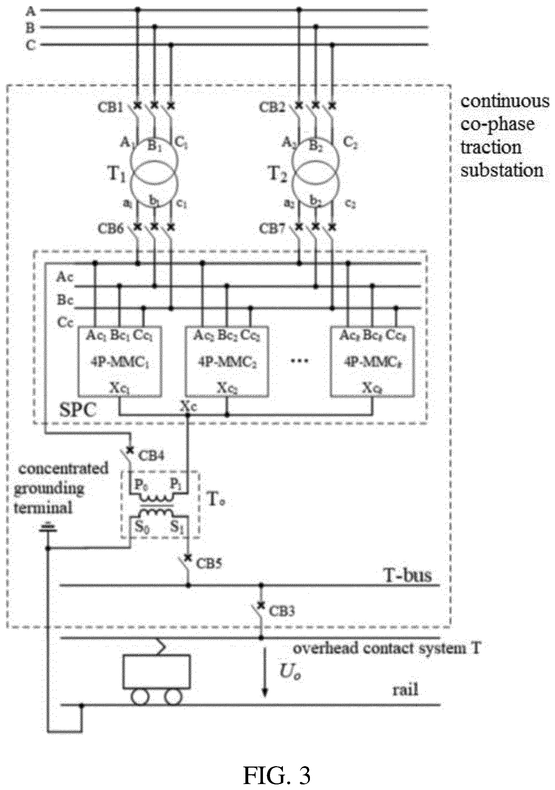

Alternatively, the SPC may be configured with a single-phase output transformer $T_o$. As illustrated in FIG. 3, one port $P_1$ of a primary winding of the single-phase output transformer $T_o$ is connected to the output port Xc of the static power converter SPC, and any one of the three input ports Ac, Bc, Cc of the SPC is connected to the other port $P_0$ of the primary winding of the single-phase output transformer $T_o$ through a circuit breaker CB4, the port Ac in FIG. 3 is connected to $P_0$. The input port of the SPC connected to the primary winding port $P_0$ of the single-phase output transformer $T_o$ in each of the M continuous co-phase traction substations has a same phase sequence number. One port $S_1$ of a secondary winding of the single-phase output transformer $T_o$ is connected to the traction bus T-bus through a single-phase circuit breaker CB5, and the other port $S_0$ of the secondary winding of the single-phase output transformer $T_o$ is connected to the concentrated grounding terminal. One of the three input ports Ac, Bc, Cc and the output port Xc of the static power converter SPC may be selected to connected to a concentrated grounding box, or none of the four ports may be selected to connected to the concentrated grounding box.

A secondary-side rated voltage of the single-phase output transformer $T_o$ and a rated voltage of the traction bus T-bus are the same, an effective value of which is denoted as $U_o$, a primary-side rated voltage of the single-phase output transformer $T_o$ and a port voltage of the output port Xc of the corresponding SPC are the same, and an effective value of which is denoted as $U_x$, then a transformation ratio $K_o$ of the single-phase output transformer $T_o$ is:

$$K_o = U_o / U_x \qquad (1)$$

Furthermore, the three-phase traction transformers $T_1$ and $T_2$ with conventional wiring include but are not limited to wiring forms of YNd type, Dyn type, Yyn type, Yd type, etc., and have common characteristic of, between the three ports ($A_1$, $B_1$, $C_1$ or $A_2$, $B_2$, $C_2$) on the primary side, having a same effective value $U_L$ of rated line voltage, and phase angles of line voltages with a difference of 120 degrees in sequence, between the three ports ($a_i$, $b_1$, $c_1$ or $a_2$, $b_2$, $c_2$) on the secondary side, having a same effective value $U_l$ of rated line voltage, and phase angles of line voltages with a difference of 120 degrees in sequence. Then, a transformation ratio of each traction transformer is $K_T$, which is:

$$K_T = U_l / U_L \qquad (2)$$

One set of static power converter SPC generally includes $k$ (in general $k \in [1, 6]$ and $k$ being a natural number) identical four-port modular multilevel converters 4P-MMC. The *ith (i=1, 2, ..., k)* four-port modular multilevel converter is denoted as 4P-MMC$_i$, and four ports of the 4P-MMC$_i$ are respectively denoted as Ac$_i$, Bc$_i$, Cc$_i$, Xc$_i$. The input port Ac$_i$ of the 4P-MMC$_i$ is connected to the input port Ac of the SPC, the input port Bc$_i$ of the 4P-MMC$_i$ is connected to the input port Bc of the SPC, the input port Cc$_i$ of the 4P-MMC$_i$ is connected to the input port Cc of the SPC, and the output port Xc$_i$ of the 4P-MMC$_i$ is connected to the output port Xc of the SPC.

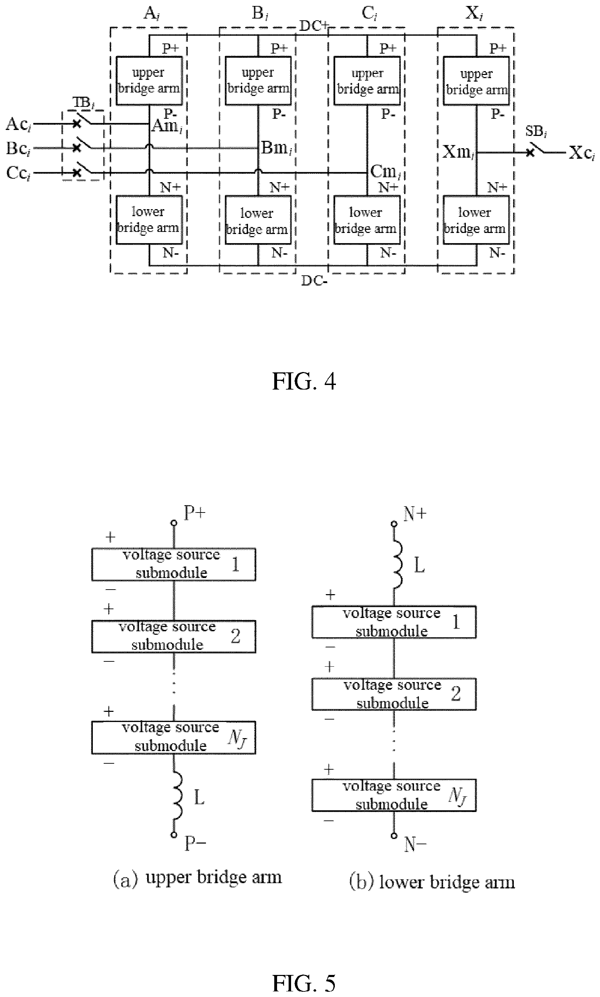

The ith four-port modular multilevel converter 4P-MMC$_i$ is illustrated in FIG. 4, including four phases A$_i$, B$_i$, C$_i$, and X$_i$ in total. Each phase includes an upper bridge arm and a lower bridge arm in series with each other. A positive terminal of the upper bridge arm of each phase is denoted as P+, a negative terminal of the upper bridge arm of each phase is denoted as P-, and a positive terminal of the lower bridge arm of each phase is denoted as N+, and a negative terminal of the lower bridge arm of each phase is denoted as N-. The positive terminals of the upper bridge arms of respective phases are connected in parallel with each other to form a DC positive pole DC+, and the negative poles of the lower bridge arms of respective phases are connected in parallel with each other to form a DC negative pole DC-. A negative terminal P- of an upper bridge arm of a phase $J_i$ ($J_i$=A$_i$, B$_i$, C$_i$, X) and a positive terminal N+ of a lower bridge arm of the phase $J_i$ form a midpoint $Jm_i$ ($Jm_i$=Am$_i$,Bm$_i$,Cm$_i$,Xm$_i$) of the phase $J_i$. Am$_i$, Bm$_i$, Cm$_i$ are respectively connected to the input ports Ac$_i$, Bc$_i$, Cc$_i$ of the 4P-MMC$_i$ through a three-phase circuit breaker TB$_i$, while Xm$_i$ is connected to the output port Xc$_i$ of the 4P-MMC$_i$ through a single-phase circuit breaker SB$_i$.

The upper bridge arm of the phase $J_i$ of the ith four-port modular multilevel converter 4P-MMC$_i$ is illustrated in FIG. 5(a), including $N_J$ voltage source submodules and a filtering inductor in series. A positive terminal of a first one of the voltage source submodules is taken as a positive terminal P+ of the upper bridge arm of the phase $J_i$, a negative terminal of each voltage source submodule is connected to a positive terminal of a next voltage source submodule, a negative terminal of the last voltage source submodule is connected to one terminal of the filtering inductor, and the other terminal of the filtering inductor is taken as a negative terminal P- of the upper bridge arm of the phase $J_i$.

The lower bridge arm of the phase $J_i$ of the ith four-port modular multilevel converter 4P-MMC$_i$ is illustrated in FIG. 5(b), including $N_J$ voltage source submodules and a filtering inductor in series. A positive terminal of a first one of the voltage source submodules is connected to one terminal of the filtering inductor, the other terminal of the filtering inductor is taken as a positive terminal N+ of the lower bridge arm of the phase $J_i$, a negative terminal of each voltage source submodule is connected to a positive terminal of a next voltage source submodule, a negative terminal of the last voltage source submodule is taken as a negative terminal N- of the lower bridge arm of the phase $J_i$.

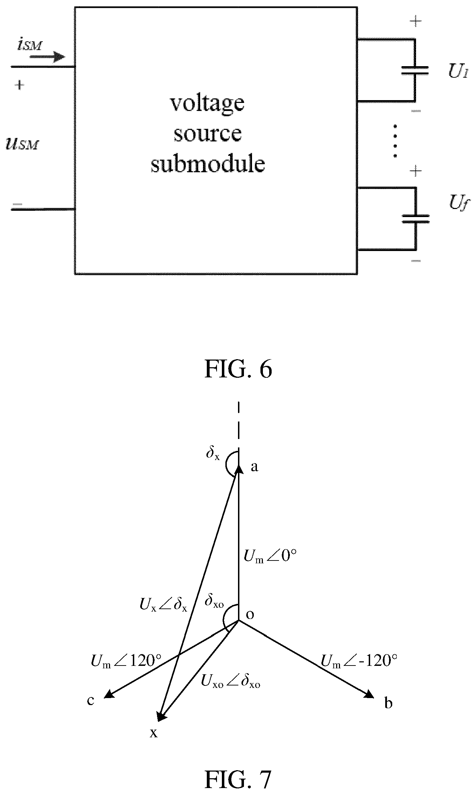

Each voltage source submodule has a single-phase voltage source converter structure, with $g$ ($g$ is a positive integer and satisfies g≥2) output levels. A voltage between an AC positive pole and an AC negative pole of the voltage source submodule is denoted as $u_{SM}$, a current flowing through the voltage source submodule is denoted as $i_{SM}$, and a direction from the positive terminal to the negative terminal of the voltage source submodule is as a positive direction, as illustrated in FIG. 6. The voltage source submodule includes $f$ ($f$ is a positive integer and satisfies $g > f \geq 1$) DC capacitors. A voltage difference between a positive pole and a negative pole of a vth DC capacitor in the voltage source submodule is a DC voltage $U_{cv}$ ($v$=1, 2, ..., f) of the DC capacitor, and a rated DC voltage $U_c$ of the voltage source submodule generally satisfies the following equation:

$$U_c \leq \sum_{v=1}^{f} U_{cv} \ . \qquad (3)$$

When all power electronic switches inside the voltage source submodule are turned off under control, in response to a direction of the current flowing through the voltage source submodule being negative, an amplitude of the voltage at the port of the voltage source submodule is approximately zero.

The voltage source submodule includes, but is not limited to, the following power submodule type of:

a half-bridge submodule (abbreviation for HBSM), denoted as an $A_1$-type voltage source submodule, corresponding to $g=2, f=1$, a double half-bridge submodule, denoted as an $A_2$-type voltage source submodule, corresponding to $g=3, f=2$, a T-type neutral point clamping submodule with a blocking switch, denoted as an $A_3$-type voltage source submodule, corresponding to $g=3, f=2$, a flying capacitor three-level submodule, denoted as an $A_4$-type voltage source submodule, corresponding to $g=3, f=2$. In which, the $A_1$-$A_4$ type submodules are well-known standard circuits, of which $A_2$, $A_3$, $A_4$ may refer to Reference (Nami, A., et al., Modular Multilevel Converters for HVDC Applications: Review on Converter Cells and Functionalities. IEEE Transactions on Power Electronics, 2015. 30(1): p. 18-36.).

The power electronic switch of the voltage source submodule generally adopts a reverse conducting type IGBT or IGCT (which may be used independently or combined).

In a case that the continuous co-phase traction power supply system proposed in the present disclosure adopts a form of direct power supplying, an effective value of rated voltage of the overhead contact system T is denoted as $U_o$, an effective value of rated line voltage of the continuous co-phase traction substation connected to the synchronous public AC grid is denoted as $U_L$, a rated apparent capacity of a traction load of each continuous co-phase traction substation is denoted as S, a power factor angle of a traction load of each traction substation is denoted as $\varphi_x$, the continuous co-phase traction substation injects ports of the synchronous public AC power grid with a positive sequence current, and a power factor angle of a near-end port is denoted as $\phi$, the power factor angle is as positive with a voltage lagging behind a current. Taking the number k of the four-port modular multilevel converter 4P-MMC included in one set of static power converter SPC in the continuous co-phase traction substation equal to 1 (k=1) as an example, main electrical quantity characteristics of the SPC are explained (for a case of k taking as other values, the main electrical quantity characteristics of the SPC are also configured in the way defined by formulas (4) to (20)).

Line voltages of the secondary ports of the traction transformers $T_1$ and $T_2$ are denoted as $u_{ab}$, $u_{bc}$, $u_{ca}$, respectively. A virtual neutral point of phase voltages of the secondary ports of the traction transformers $T_1$ and $T_2$ is denoted as o, and the corresponding phase voltages are denoted as $u_{ao}$, $u_{bo}$, $u_{co}$, respectively. A form of phasor is expressed as $\dot{U}_{oa}$, $\dot{U}_{ob}$, $\dot{U}_{oc}$, and a voltage phasor $\dot{U}_{oa}$ is as a reference phase. A diagram of a voltage phasor is illustrated in FIG. 7, where $U_m$ is an effective value of an AC component of a voltage of the bridge arm with upper and lower in each of the phases $A_1$, $B_1$, $C_1$ of the 4P-MMC$_1$, $U_{xo}$ is an effective value of an AC component of a voltage of the bridge arm with upper and lower in the phase $X_1$ of the 4P-MMC$_1$, $\delta_{xo}$ is a phase angle of an AC component of a voltage of the bridge arm with upper and lower in the phase $X_1$ of the 4P-MMC$_1$, $U_x$ is an effective value of a voltage $u_{xa}$ of the output port Xc of the static power converter SPC, $\delta_x$ is a phase angle of the voltage $u_{xa}(t)$.

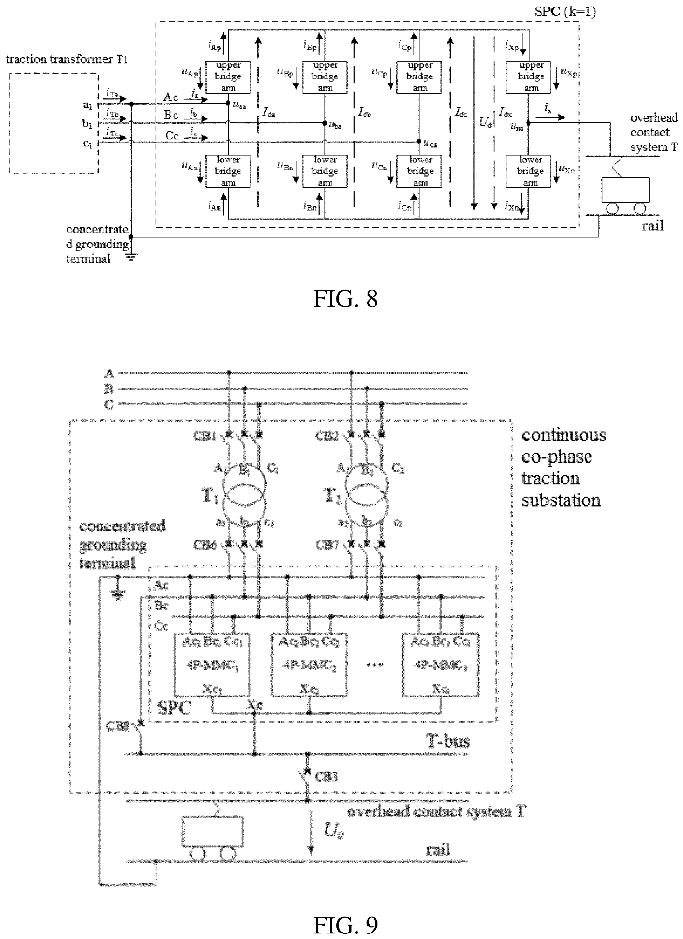

Related electrical quantities and a reference direction of one set of SPC are illustrated in FIG. 8. Taking the input port Ac of the SPC in FIG. 2 connected to the concentrated grounding terminal as an example, the input port Ac and the secondary ports $a_1$ and $a_2$ of the traction transformer are both a reference level, then relative to the reference level (see point a in FIG. 7), voltages of the input ports Ac, Bc, Cc and the output ports Xc of the SPC, namely, voltages $u_{aa}(t)$, $u_{ba}(t)$, $u_{ca}(t)$ and $u_{xa}(t)$ of the AC ports of the phases $A_1$, $B_1$, $C_1$, $X_1$ of the 4P-MMC$_1$ converter are respectively expressed as the following equation:

$$\begin{cases} u_{aa}(t) = 0 \\ u_{ba}(t) = \sqrt{2}U_l \sin(\omega t - \frac{5\pi}{6}) \\ u_{ca}(t) = \sqrt{2}U_l \sin(\omega t + \frac{5\pi}{6}) \\ u_{xa}(t) = \sqrt{2}U_x \sin(\omega t + \delta_x) \end{cases} \qquad (4)$$

where, $\omega$ is an angular frequency of the synchronous public AC power grid, $t$ is a system operation time, $U_l$ is an effective value of rated voltage between lines of the secondary ports of the three-phase conventional traction transformers $T_1$ and $T_2$, and $U_x$ is an effective value of a voltage $u_{xa}$ of the output port Xc of the SPC, $\delta_x$ is a phase angle of the voltage $u_{xa}(t)$, taken as positive with ahead of a reference voltage phasor $\dot{U}_{oa}$. In general, a value range of $\delta_x$ is selected to satisfy the following equation:

$$\frac{5\pi}{6} \leq \delta_x \leq \frac{7\pi}{6} \qquad (5)$$

In the present disclosure, the phase angle of the voltage $u_{xa}(t)$ of the output port of the SPC is generally selected to satisfy $\delta_x = \pi$.

An effective value of an AC component of a voltage of the bridge arm with upper and lower in each of the phases $A_1$, $B_1$, and $C_1$ in 4P-MMC$_1$ is $U_m$, and may satisfy the following equation:

$$U_m = \frac{\sqrt{3}}{3} U_l . \qquad (6)$$

$U_d$ is a rated DC voltage between the DC positive pole DC+ and the DC negative pole DC- of the 4P-MMC$_1$, and may satisfy the following equation:

$$U_d = \frac{2\sqrt{2}U_m}{m} \qquad (7)$$

where, m is a modulation degree of three phases $A_1$, $B_1$, and $C_1$.

An effective value $U_{xo}$ and a phase angle $\delta_{xo}$ of an AC component of a voltage of the bridge arm with upper and lower in the phase $X_1$ in the 4P-MMC$_1$ may satisfy the following equation:

$$\begin{cases} U_{xo} = \sqrt{U_m^2 + U_x^2 + 2U_m U_x \cos\delta_x} \\ \delta_{xo} = \pi - \sin^{-1}\dfrac{U_x \sin\delta_x}{U_{xo}} \end{cases} . \qquad (8)$$

A modulation degree of the phase $X_1$ is denoted as $m_x$, and $m_x$ may satisfy the following equation:

$$m_x = \frac{2\sqrt{2}U_{xo}}{U_d} \qquad (9)$$

In general, $m$, $m_x$ may be selected from [0.8,0.95] *(m, $m_x$ ∈ [0.8,0.95])*.

Further, voltages of the upper and lower arms of the phases $A_1$, $B_1$, $C_1$, and $X_1$ of the 4P-MMC$_1$ in the SPC respectively are:

$$\begin{cases} u_{Ap,n}(t) = \dfrac{U_d}{2} \mp \sqrt{2}U_m \sin\omega t \\ u_{Bp,n}(t) = \dfrac{U_d}{2} \mp \sqrt{2}U_m \sin(\omega t - \dfrac{2\pi}{3}) \\ u_{Cp,n}(t) = \dfrac{U_d}{2} \mp \sqrt{2}U_m \sin(\omega t + \dfrac{2\pi}{3}) \\ u_{Xp,n}(t) = \dfrac{U_d}{2} \mp \sqrt{2}U_{xo} \sin(\omega t + \delta_{xo}) \end{cases} \qquad (10)$$

Correspondingly, the number $N_A$, $N_B$, $N_C$, $N_X$ of the voltage source submodules on the upper and lower arms of the phases $A_1$, $B_1$, $C_1$, $X_1$ of the 4P-MMC$_1$ may satisfy the following equation:

$$\begin{cases} N_A, N_B, N_C \geq \dfrac{\sqrt{2}(1+m)U_m}{mU_c} \\ N_X \geq \dfrac{\sqrt{2}(1+m_x)U_{xo}}{m_x U_c} \end{cases} \qquad (11)$$

As illustrated in FIG. 8, currents of the ports Ac, Bc, Cc, Xc of the SPC, namely, currents of the AC ports of the

phases $A_1$, $B_1$, $C_1$, $X_1$ of the 4P-MMC$_1$, are respectively denoted as $i_a(t)$, $i_b(t)$, $i_c(t)$, $i_x(t)$. Currents $i_{Ta}(t)$, $i_{Tb}(t)$, $i_{Tc}(t)$ of the secondary ports of the first traction transformer $T_1$ or the second traction transformer $T_2$ both are a positive sequence symmetrical current, with an effective value of $I_l$.

Then the following equation is satisfied:

$$\begin{cases} i_a\left(t\right)=i_{Ta}\left(t\right)+i_x\left(t\right) \\ i_b\left(t\right)=i_{Tb}\left(t\right) \\ i_c\left(t\right)=i_{Tc}\left(t\right) \end{cases} \qquad (12)$$

More specifically, $i_a(t)$, $i_b(t)$, $i_c(t)$, $i_x(t)$ may satisfy the following equation:

$$\begin{cases} i_a\left(t\right)=\sqrt{2}\,I_l\sin(\omega t+\varphi+\sqrt{2}\,I_x\sin(\omega t+\delta_x+\varphi_x) \\ i_b\left(t\right)=\sqrt{2}\,I_l\sin(\omega t+\varphi-\dfrac{2\pi}{3}) \\ i_c\left(t\right)=\sqrt{2}\,I_l\sin(\omega t+\varphi+\dfrac{2\pi}{3}) \\ i_x\left(t\right)=\sqrt{2}\,I_x\sin(\omega t+\delta_x+\varphi_x) \end{cases} \qquad (13)$$

where $I_x$ is an effective value of $i_x(t)$.

According to the law of energy conservation and without considering loss of the SPC, the following equation may be satisfied:

$$\begin{cases} I_l=\dfrac{S\cos\varphi_x}{\sqrt{3}U_l\cos\varphi} \\ I_x=\dfrac{S}{U_x} \end{cases} \qquad (14)$$

where S is a rated apparent capacity of the traction load of the continuous co-phase traction substation.

Currents of the bridge arms with upper and lower in the phases $A_1$, $B_1$, $C_1$, and $X_1$ of the 4P-MMC$_1$ respectively are:

$$\begin{cases} i_{Ap,n}\left(t\right)=I_{da}\pm\dfrac{i_a\left(t\right)}{2} \\ i_{Bp,n}\left(t\right)=I_{db}\pm\dfrac{i_b\left(t\right)}{2} \\ i_{Cp,n}\left(t\right)=I_{dc}\pm\dfrac{i_c\left(t\right)}{2} \\ i_{Xp,n}\left(t\right)=I_{dx}\pm\dfrac{i_x\left(t\right)}{2} \end{cases} \qquad (15)$$

where, $I_{da}$, $I_{db}$, $I_{dc}$, $I_{dx}$ are DC components of currents of the bridge arms of the phases $A_1$, $B_1$, $C_1$, and $X_1$, respectively, which may satisfy the following equation:

$$\begin{cases} I_{da} = \dfrac{\sqrt{2}U_m\left[I_l\cos\varphi + I_x\cos\left(\delta_x + \varphi_x\right)\right]}{2U_d} \\[4mm] I_{db} = \dfrac{\sqrt{2}U_m I_l\cos\varphi}{2U_d} \\[4mm] I_{dc} = \dfrac{\sqrt{2}U_m I_l\cos\varphi}{2U_d} \\[4mm] I_{dx} = \dfrac{\sqrt{2}U_{xo}I_x\cos\left(\delta_x - \delta_{xo} + \varphi_x\right)}{2U_d} \end{cases} \tag{16}$$

Generally, when the SPC includes k 4P-MMCs with the same specification connected in parallel, the currents of the bridge arm with upper and lower in respective phases of each 4P-MMC may be expressed as the following equation:

$$\begin{cases} i_{Ap,n}(t) = \dfrac{\sqrt{6}mS\cos\varphi_x}{12kU_l} + \dfrac{\sqrt{2}mS\cos\left(\delta_x + \varphi_x\right)}{4kU_x} \\[3mm] \qquad \pm\left[\dfrac{\sqrt{6}S\cos\varphi_x}{6kU_l\cos\varphi}\sin\left(\omega t + \varphi\right) + \dfrac{\sqrt{2}S}{2kU_x}\sin\left(\omega t + \delta_x + \varphi_x\right)\right] \\[4mm] i_{Bp,n}(t) = \dfrac{\sqrt{6}S\cos\varphi_x}{6kU_l\cos\varphi}\left[\dfrac{m\cos\varphi}{2} \pm \sin\left(\omega t + \varphi - \dfrac{2\pi}{3}\right)\right] \\[4mm] i_{Cp,n}(t) = \dfrac{\sqrt{6}S\cos\varphi_x}{6kU_l\cos\varphi}\left[\dfrac{m\cos\varphi}{2} \pm \sin\left(\omega t + \varphi + \dfrac{2\pi}{3}\right)\right] \\[4mm] i_{Xp,n}(t) = \dfrac{\sqrt{6}mS\cos\varphi_x}{4kU_l} + \dfrac{\sqrt{2}mS\cos\left(\delta_x + \varphi_x\right)}{4kU_x} \pm \dfrac{\sqrt{2}S}{2kU_x}\sin\left(\omega t + \delta_x + \varphi_x\right) \end{cases} \tag{17}$$

In particular, when the modulation degree of each phase of the 4P-MMC satisfy $m=m_x$ (under a case of the number of 4P-MMCs greater than 1, the modulation degree of each phase in a single 4P-MMC may be equal), the capacity utilization of the bridge arm in each phase is the largest. For a typical operating point of the SPC $\delta_x=\pi$, $U_l$ and $U_x$ may satisfy the following equation:

$$\frac{U_x}{U_l} = \frac{2\sqrt{3}}{3} \tag{18}$$

When the SPC of the present disclosure is not configured with the output single-phase transformer $T_o$, the output port Xc of the SPC is directly connected to the traction bus T-bus of the continuous co-phase traction substation, and the effective value of the voltage of the traction bus T-bus and the effective value of rated voltage of the overhead contact system T are the same as $U_o$, which may satisfy the following equation:

$$U_x = U_o \tag{19}$$

When the SPC of the present disclosure is configured with the output single-phase transformer $T_o$, and $U_l=U_o$, the transformation ratio $K_o$ of the single-phase output transformer $T_o$ may satisfy the following equation:

$$K_o = \frac{\sqrt{3}}{2} \tag{20}$$

The following describes the operation principle of the continuous co-phase traction power supply system in the present disclosure.

When the continuous co-phase traction power supply system of the present disclosure operates normally, M continuous co-phase traction substations may share the traction load of the whole lines of the continuous traction overhead contact system.

The traction transformers $T_1$ and $T_2$ may be used as standby for each other. Under this mode, when the continuous co-phase traction substation operates normally, in response to the first traction transformer $T_1$ being put into operation and the second traction transformer $T_2$ being in standby, the three-phase circuit breakers CB1 and CB6 are turned on, and the CB2 and CB7 are turned off. In response to a fault occurring when the first traction transformer $T_1$, or the primary ports or the secondary ports of the first traction transformer $T_1$ are connected to lines for operation, the CB1 and CB6 are turned off in sequence to remove the first traction transformer $T_1$ from operation, then the CB2 and CB7 are turned on in sequence, and the second traction transformer $T_2$ is put into operation. In response to a fault occurring when the second traction transformer $T_2$, or the primary ports or the secondary ports of the second traction transformer $T_2$ are connected to the lines for operation, the CB2 and CB7 are turned off in sequence, to remove the second traction transformer $T_2$ from operation, the CB1 and CB6 are turned on in sequence, and the first traction transformer $T_1$ is put into operation.

Furthermore, the traction transformers $T_1$ and $T_2$ may operate in parallel. Under this mode, when the continuous co-phase traction substation operates normally, the first traction transformer $T_1$ and the second traction transformer $T_2$ both are put into operation, and the three-phase circuit breakers CB1, CB2, CB6, and CB7 are turned on. In response to the fault occurring when the first traction transformer $T_1$, or the primary ports or the secondary ports of the first traction transformer $T_1$ are connected to the lines, the CB1 and CB6 are turned off to remove the first traction transformer $T_1$ from operation. In response to the fault occurring when the second traction transformer $T_2$, or the primary ports or the secondary ports of the second traction transformer $T_2$ are connected to the lines, the CB2 and CB7 are turned off, to remove the second traction transformer $T_2$ from operation. In the present disclosure, k 4P-MMCs in one set of SPC of the continuous co-phase traction substation share the power of the traction load averagely, and a rated power capacity of the traction load allowable for each 4P-MMC is $S/k$. When it is detected that the ith converter $4P\text{-}MMC_i$ in the SPC has a fault, a trigger pulse for the power elements in the $4P\text{-}MMC_i$ is immediately blocked, and the three-phase circuit breaker $TB_i$ and the single-phase circuit breaker $SB_i$ are turned off, and the remaining k-1 4P-MMCs in the SPC share the power of the traction load averagely. Accordingly, the rated power capacity of the traction load allowable for the traction substation is reduced to $(k\text{-}1)S/k$. When at most k-1 4P-MMCs in one set of SPC of the continuous co-phase traction substation have a fault, the traction substation is still operating in the continuous co-phase traction power supply system. When k 4P-MMCs in one set of SPC of the continuous co-phase traction substation have a fault, and the continuous co-phase traction substation fails to exit operation. The remaining M-1 traction substations of the continuous co-phase traction power supply system redistribute the power capacity for each traction substation, which does not affect the normal operation of the continuous traction power supply system. Each continuous co-phase traction substation may have certain redundant power capacity.

In particular, an embodiment of the present disclosure provides the continuous co-phase traction substation that still has the capability of power supplying after the SPC is out of operation. As illustrated in FIG. 9, in this embodiment, the continuous co-phase traction substation may satisfy $U_l=U_o$. When the SPC of the continuous co-phase traction substation in this embodiment has a fault and is out of operation as a whole, the three-phase circuit breaker $TB_i$ and the single-phase circuit breaker $SB_i$ of each 4P-MMC for each SPC are turned off, and then the circuit breaker CB8 is turned on, thus the secondary ports $b_1(b_2)$ or the secondary ports $c_1(c_2)$ of the three-phase traction transformer $T_1$ or $T_2$ may directly supply power to the traction bus T-bus, to save the power capacity of other continuous co-phase traction substations, meanwhile, the output voltage of the SPCs the remaining M-1 continuous co-phase traction substations in the continuous co-phase traction power supply system may be adjusted to track the voltage of the ports $b_1(b_2)$ or $c_1(c_2)$ of the traction substation.

Take the continuous co-phase traction power supply system for a form of direct power supplying as an example to explain a specific implementation of the present disclosure. The diagram of the system is illustrated in FIG. 3. In a specific embodiment, the number of the continuous co-phase traction substations satisfies M=1, the traction transformers $T_1$ and $T_2$ both adopt YNd type wiring, the static power converter SPC is configured with the output single-phase transformer $T_o$, and the number of the four-port modular multilevel converters 4P-MMC included in one set of SPC satisfies k=1. The effective value of rated line voltage of the synchronous public AC grid satisfies $U_L=110kV$, the effective value of rated line voltage of the secondary side of the traction transformer satisfies $U_l=27.5kV$, and the transformation ratio of the traction transformer $K_T$ satisfies:

$$K_T = U_l/U_L = 0.25 \qquad (21)$$

In a specific embodiment, the phase angle $\delta_x$ of the voltage $u_{xa}(t)$ of the output port of the SPC satisfies $\delta_x=\pi$, the modulation degree of each phase of the $4P\text{-}MMC_1$ may satisfy $m=m_x=0.9$, and the effective value $U_x$ of the port voltage of the output port Xc of the SPC may satisfy:

$$U_{\mathrm{x}} = \frac{2\sqrt{3}}{3} U_l = 31.8\mathrm{kV} \tag{22}$$

The voltage of the bus T-bus and the voltage $U_{\mathrm{o}}$ of the overhead contact system of the continuous co-phase traction substation are equal to 27.5kV ($U_{\mathrm{o}}$=27.5kV), and the transformation ratio $K_{\mathrm{o}}$ of the output transformer $T_{\mathrm{o}}$ may satisfy:

$$K_{\mathrm{o}} = U_{\mathrm{o}}/U_{\mathrm{x}} = 0.87 \tag{23}$$

The effective value $U_{\mathrm{m}}$ of the AC component of the voltage of the bridge arm with upper and lower in each of the phases $A_1$, $B_1$, $C_1$ of the 4P-MMC$_1$ may satisfy:

$$U_{\mathrm{m}} = \frac{\sqrt{3}}{3} U_l = 15.9\mathrm{kV} \tag{24}$$

The rated DC voltage $U_{\mathrm{d}}$ between the DC positive pole DC+ and the DC negative pole DC- of the 4P-MMC$_1$ may satisfy:

$$U_{\mathrm{d}} = \frac{2\sqrt{2}U_{\mathrm{m}}}{m} = 50\mathrm{kV} \tag{25}$$

The effective value $U_{\mathrm{xo}}$ and the phase angle $\delta_{\mathrm{xo}}$ of the AC component of the voltage of the bridge arm with upper and lower in the phase $X_1$ in the 4P-MMC$_1$ may satisfy:

$$\begin{cases} U_{\mathrm{xo}} = \sqrt{U_{\mathrm{m}}^2 + U_{\mathrm{x}}^2 + 2U_{\mathrm{m}}U_{\mathrm{x}}\cos\delta_{\mathrm{x}}} = 15.9\mathrm{kV} \\ \delta_{\mathrm{xo}} = \pi - \sin^{-1}\dfrac{U_{\mathrm{x}}\sin\delta_{\mathrm{x}}}{U_{\mathrm{xo}}} = \pi \end{cases} \tag{26}$$

In a specific embodiment, the voltage source submodule adopts the half-bridge submodule, and the rated DC voltage of the module is $U_{\mathrm{c}}$=1kV, then the number $N_{\mathrm{A}}$, $N_{\mathrm{B}}$, $N_{\mathrm{C}}$, $N_{\mathrm{X}}$ of the voltage source submodule on the upper and lower arms of the phases $A_1$, $B_1$, $C_1$, $X_1$ of the 4P-MMC$_1$ may satisfy:

$$\begin{cases} N_{\mathrm{A}}, N_{\mathrm{B}}, N_{\mathrm{C}} \geq \dfrac{\sqrt{2}(1+m)U_{\mathrm{m}}}{mU_{\mathrm{c}}} = 47.5 \\ N_{\mathrm{X}} \geq \dfrac{\sqrt{2}(1+m_{\mathrm{x}})U_{\mathrm{xo}}}{m_{\mathrm{x}}U_{\mathrm{c}}} = 47.5 \end{cases}, \tag{27}$$

taking $N_{\mathrm{A}}=N_{\mathrm{B}}=N_{\mathrm{C}}=N_{\mathrm{X}}=50$.

The rated apparent capacity of the traction load of the continuous co-phase traction substation is S=40MVA, a power factor angle of an input near-end port of the continuous co-phase traction substation is $\varphi$=0°, and a power factor angle of an output near-end port of the continuous co-phase traction substation is $\varphi_{\mathrm{x}}$=0°, then the effective value $I_l$ of the current of the secondary port of the traction transformer and the effective value $I_{\mathrm{x}}$ of the current of the output port of the SPC are respectively:

$$\begin{cases} I_l = \dfrac{S \cos \varphi_x}{\sqrt{3} U_l \cos \varphi} = 840A \\[3mm] I_x = \dfrac{S}{U_x} = 1258A \end{cases} \tag{28}$$

In a specific embodiment, key parameters of the system are shown in the following table.

| parameter | value |
| --- | --- |
| Effective value of rated line voltage of synchronous public AC grid $U_L$/kV | 110 |
| Frequency of synchronous public AC grid f/Hz | 50 |
| Effective value of rated line voltage of secondary side of traction transformer $U_l$/kV | 27.5 |
| Effective value of rated voltage of output port of SPC $U_x$/kV | 31.8 |
| Effective value of rated voltage of overhead contact system $U_o$/kV | 27.5 |
| Transformation ratio of traction transformer $K_T$ | 0.25 |
| Transformation ratio of output transformer $K_o$ | 0.87 |
| rated DC voltage of 4P-MMC $U_d$/kV | 50 |
| Rated apparent capacity of substation load S/MVA | 40 |
| Effective value of rated current of secondary side of traction transformer $I_l$/A | 840 |
| Effective value of rated current of output port of SPC $I_x$/A | 1258 |
| Number of half- bridge submodules in each bridge arm $N_A,N_B,N_C,N_X$ | 50 |
| Rated DC voltage of half-bridge submodule $U_c$/V | 1000 |
| Power factor angle of input near-end port of traction substation $\varphi$/° | 0 |
| Power factor angle of output near end port of traction substation $\varphi_x$/° | 0 |
| phase angle of voltage of output port of SPC $\delta_x$ | $\pi$ |

In a specific embodiment, a maximum withstand voltage, an effective current value, a current peak value and a capacity of each bridge arm of the 4P-MMC are shown in the following table.

| parameter | $A_1$ | $B_1$ | $C_1$ | $X_1$ |
| --- | --- | --- | --- | --- |
| Maximum withstand voltage of bridge arm /kV | 47.4 | 47.4 | 47.4 | 47.4 |
| Effective current value of bridge arm /A | 249 | 498 | 498 | 747 |
| Current peak value of bridge arm /A | 431 | 861 | 861 | 1292 |
| Capacity of bridge arm (effective value) /MVA | 11.8 | 23.6 | 23.6 | 35.4 |
| Capacity of bridge arm (peak value) /MVA | 20.4 | 40.8 | 40.8 | 61.2 |

Under a same operating condition, a maximum withstand voltage, an effective current value, a current peak value and a capacity of each bridge arm in the five-port AC to DC to AC MMC described in Reference 2 are shown in the following table.

| parameter | $A_1$ | $B_1$ | $C_1$ | $X_1$ | $Y_1$ |
| --- | --- | --- | --- | --- | --- |
| Maximum withstand voltage of bridge arm /kV | 47.4 | 47.4 | 47.4 | 44.4 | 44.4 |
| Effective current value of bridge arm /A | 498 | 498 | 498 | 830 | 830 |
| Current peak value of bridge arm /A | 861 | 861 | 861 | 1429 | 1429 |
| Capacity of bridge arm (effective value) /MVA | 23.6 | 23.6 | 23.6 | 36.9 | 36.9 |
| Capacity of bridge arm (peak value) /MVA | 40.8 | 40.8 | 40.8 | 63.4 | 63.4 |

A sum of capacities (effective value) of respective bridge arms of the 4P-MMC is 188.8MVA, and a sum of capacities (peak value) of respective bridge arms is 326.4MVA. In the five-port AC to DC to AC MMC described in Reference 2, a sum of capacities (effective value) of respective bridge arms is 289.2MVA, and a sum of capacities (peak value) of respective bridge arms is 498.4MVA. Compared with the five-port AC to DC to AC MMC described in Reference 2, the 4P-MMC proposed in the present disclosure may reduce costs of power elements and capacitors by 35%.

**Claims**

1. A continuous co-phase traction power supply system based on a four-port modular multilevel converter, comprising a plurality of continuous co-phase traction substations arranged at intervals, wherein a source side of each continuous co-phase traction substation is connectable to a same synchronous public AC power grid, and a traction bus at a load side of each continuous co-phase traction substation is connectable to an overhead contact system T, all continuous co-phase traction substations are connectable with each other through the overhead contact system T;

each continuous co-phase traction substation comprises a first traction transformer $T_1$, a second traction transformer $T_2$, a plurality of switches and a static power converter SPC with three input ports Ac, Bc, Cc and one output port Xc; the first traction transformer $T_1$ and the second traction transformer $T_2$ each has a three-phase transformer structure; primary ports of respective phases of the first traction transformer $T_1$ and the second traction transformer $T_2$ are respectively connectable to three phases A, B and C of the synchronous public AC power grid through three-phase circuit breakers CB1, CB2, wherein the phase A is ahead of the phase B by 120 degrees and the phase A lags behind the phase C by 120 degrees, secondary ports of respective phases of the first traction transformer $T_1$ and the second traction transformer $T_2$ are respectively connected to three input ports Ac, Bc and Cc of the static power converter SPC through three-phase circuit breakers CB6 and CB7, an output port Xc of the static power converter is connected to a traction bus T-bus, the traction bus T-bus is connectable to the overhead contact system T through a single-phase circuit breaker CB3, and a rail is connected to a concentrated grounding terminal of the corresponding continuous co-phase traction substation through a return line; the concentrated grounding terminal of the continuous co-phase traction substation is connected with one input port of the static power converter SPC, and the input port of the static power converter SPC connected to the concentrated grounding terminal in each continuous co-phase traction substation has a same phase sequence number; the static power converter SPC comprises k four-port modular multilevel converters 4P-MMC in parallel, each four-port modular multilevel converter 4P-MMC comprises four phases A, B, C and X each comprising an upper bridge arm and a lower bridge arm in series, positive terminals of the upper bridge arms of the four phases are connected in parallel with each other to form a DC positive pole DC+, and negative poles of the lower bridge arms of the four phases are connected in parallel with each other to form a DC negative pole DC-, negative terminals of the upper bridge arms of the four phases and positive terminals of the lower bridge arms of the four phases are respectively connected in series as midpoints of respective phases; the midpoints of three phases A, B, and C of each four-port modular multilevel converter 4P-MMC are respectively connected to the corresponding input ports Ac, Bc and Cc of the static power converter SPC through a three-phase circuit breaker TB, and the midpoint of the phase X of each four-port modular multilevel converter 4P-MMC are respectively connected to the output port Xc of the static power converter SPC through a single-phase circuit breaker SB;
wherein the primary ports of the first traction transformer $T_1$ and the second traction transformer $T_2$ have a same effective value $U_L$ of rated line voltage, and phase angles of line voltages with a difference of 120 degrees in sequence; the secondary ports of the first traction transformer $T_1$ and the second traction transformer $T_2$ have a same effective value $U_l$ of rated line voltage, and phase angles of line voltages with a difference of 120 degrees in sequence; a transformation ratio of each of the first traction transformer $T_1$ and the second traction transformer $T_2$ is $K_T$, which is:

$$K_T = U_l / U_L .$$

2. The system according to claim 1, wherein each continuous co-phase traction substation further comprises a single-phase output transformer $T_o$, one port $P_1$ of a primary winding of the single-phase output transformer $T_o$ is connected to the output port Xc of the static power converter SPC in the corresponding continuous co-phase traction substation, any input port of the static power converter SPC is connected to the other port $P_0$ of the primary winding of the single-phase output transformer $T_o$ through a circuit breaker CB4, and the input port of the static power converter SPC connected to the port $P_0$ of the primary winding of the single-phase output transformer $T_o$ in each continuous co-phase traction substation has a same phase sequence number; one port $S_1$ of a secondary winding of the single-phase output transformer $T_o$ is connected to the traction bus T-bus through a single-phase circuit breaker CB5, and the other port $S_0$ of the secondary winding of the single-phase output transformer $T_o$ is connected to the concentrated grounding terminal in the corresponding continuous co-phase traction substation;

wherein a secondary-side rated voltage of the single-phase output transformer $T_o$ and a rated voltage of the traction bus T-bus are the same, an effective value of which is denoted as $U_o$, a primary-side rated voltage of the single-phase output transformer $T_o$ and a port voltage of the output port Xc of the corresponding static power converter SPC are the same, and an effective value of which is denoted as $U_x$, a transformation ratio $K_o$ of the single-phase output transformer $T_o$ is:

$$K_o = U_o / U_x .$$

3. The system according to claim 1 or 2, wherein in each phase of the four-port modular multilevel converter 4P-MMC, the upper bridge arm and the lower bridge arm have a same structure, comprising a plurality of voltage source submodules and a filtering inductor in series; in the upper bridge arm, a positive terminal of a first one of the voltage source submodules and one terminal of the filtering inductor are taken as a positive terminal and a negative terminal of the upper bridge arm respectively; in the lower bridge arm, one terminal of the filtering inductor and a negative terminal of a last one of the voltage source submodules are taken as a positive terminal and a negative terminal of the lower bridge arm respectively.

4. The system according to claim 3, wherein an effective value of rated voltage of the overhead contact system T is denoted as $U_o$, an effective value of rated line voltage of the continuous co-phase traction substation connectable to the synchronous public AC grid is denoted as $U_L$, and a rated apparent capacity and a power factor angle of a traction load of each continuous co-phase traction substation are respectively denoted as S and $\varphi_x$; the continuous co-phase traction substation injects ports of the synchronous public AC power grid with a positive sequence current, and a power factor angle of a near-end port is denoted as $\varphi$, the power factor angle is as positive with a voltage lagging behind a current; the concentrated grounding terminal is connected to an input port Ac of the static power converter SPC, namely, the input port Ac and the secondary port of each traction transformer connected the input port Ac are both as a reference level, a main electrical quantity characteristic of the static power converter SPC is set as follows: voltages of the input ports Ac, Bc, Cc and the output ports Xc of the static power converter SPC, namely, voltages $u_{aa}$ $(t)$, $u_{ba}(t)$, $u_{ca}(t)$ and $u_{xa}(t)$ of the AC ports of the phases A, B, C and X of each four-port modular multilevel converter 4P-MMC are respectively expressed as:

$$\begin{cases} u_{aa}(t) = 0 \\ u_{ba}(t) = \sqrt{2}U_l \sin(\omega t - \dfrac{5\pi}{6}) \\ u_{ca}(t) = \sqrt{2}U_l \sin(\omega t + \dfrac{5\pi}{6}) \\ u_{xa}(t) = \sqrt{2}U_x \sin(\omega t + \delta_x) \end{cases}$$

where, $\omega$ is an angular frequency of the synchronous public AC power grid, $t$ is a system operation time, $U_l$ is the effective value of rated line voltage between the secondary ports of the first traction transformer $T_1$ and the second traction transformer $T_2$, and $U_x$ is an effective value of voltage $u_{xa}$ of the output port Xc of the static power converter SPC, $\delta_x$ is a phase angle of the voltage $u_{xa}(t)$, taken as positive with ahead of a reference voltage phasor $\dot{U}_{oa}$ ; an effective value $U_m$ of an AC component of a voltage of the bridge arm with upper and lower in each of the phases A, B, and C of each four-port modular multilevel converter 4P-MMC is:

$$U_m = \frac{\sqrt{3}}{3} U_l$$

a rated DC voltage $U_d$ between the DC positive pole DC+ and the DC negative pole DC- of each four-port modular multilevel converter 4P-MMC is:

$$U_d = \frac{2\sqrt{2}U_m}{m}$$

where, m is a modulation degree of three phases A, B and C of each four-port modular multilevel converter 4P-MMC; an effective value $U_{xo}$ and a phase angle $\delta_{xo}$ of an AC component of a voltage of the bridge arm with upper and lower in the phase X of each four-port modular multilevel converter 4P-MMC respectively are:

$$\begin{cases} U_{xo} = \sqrt{U_m^2 + U_x^2 + 2U_m U_x \cos \delta_x} \\ \delta_{xo} = \pi - \sin^{-1} \dfrac{U_x \sin \delta_x}{U_{xo}} \end{cases}$$

a modulation degree $m_x$ of the phase X of each four-port modular multilevel converter 4P-MMC is:

$$m_x = \frac{2\sqrt{2}U_{xo}}{U_d}$$

voltages of the upper and lower arms of the phases A, B, C, and X of each four-port modular multilevel converter 4P-MMC respectively are:

$$\begin{cases} u_{Ap,n}\left(t\right) = \dfrac{U_d}{2} \mp \sqrt{2}U_m \sin \omega t \\ u_{Bp,n}\left(t\right) = \dfrac{U_d}{2} \mp \sqrt{2}U_m \sin(\omega t - \dfrac{2\pi}{3}) \\ u_{Cp,n}\left(t\right) = \dfrac{U_d}{2} \mp \sqrt{2}U_m \sin(\omega t + \dfrac{2\pi}{3}) \\ u_{Xp,n}\left(t\right) = \dfrac{U_d}{2} \mp \sqrt{2}U_{xo} \sin(\omega t + \delta_{xo}) \end{cases}$$

a current of the secondary port of each of the phases A, B and C of the first traction transformer $T_1$ or the second traction transformer $T_2$ is a positive sequence symmetrical current, with an effective value of $I_l$, an effective value of a current of the secondary port of the phase X of the first traction transformer $T_1$ or the second traction transformer $T_2$ is $I_x$, which respectively satisfy:

$$\begin{cases} I_l = \dfrac{S \cos \varphi_x}{\sqrt{3}U_l \cos \varphi} \\ I_x = \dfrac{S}{U_x} \end{cases}$$

currents $i_a(t)$, $i_b(t)$, $i_c(t)$, $i_x(t)$ of the AC ports of the phases A, B, C, and X of each four-port modular multilevel converter 4P-MMC respectively are:

$$\begin{cases} i_a\left(t\right) = \sqrt{2}I_l \sin(\omega t + \varphi) + \sqrt{2}I_x \sin(\omega t + \delta_x + \varphi_x) \\ i_b\left(t\right) = \sqrt{2}I_l \sin(\omega t + \varphi - \dfrac{2\pi}{3}) \\ i_c\left(t\right) = \sqrt{2}I_l \sin(\omega t + \varphi + \dfrac{2\pi}{3}) \\ i_x\left(t\right) = \sqrt{2}I_x \sin(\omega t + \delta_x + \varphi_x) \end{cases}$$

currents of the bridge arms with upper and lower in the phases A, B, C and X of each four-port modular multilevel converter 4P-MMC respectively are:

$$\begin{cases} i_{\text{Ap,n}}(t) = I_{\text{da}} \pm \dfrac{i_{\text{a}}(t)}{2} \\[2mm] i_{\text{Bp,n}}(t) = I_{\text{db}} \pm \dfrac{i_{\text{b}}(t)}{2} \\[2mm] i_{\text{Cp,n}}(t) = I_{\text{dc}} \pm \dfrac{i_{\text{c}}(t)}{2} \\[2mm] i_{\text{Xp,n}}(t) = I_{\text{dx}} \pm \dfrac{i_{\text{x}}(t)}{2} \end{cases}$$

where, $I_{\text{da}}$, $I_{\text{db}}$, $I_{\text{dc}}$, $I_{\text{dx}}$ are DC components of currents of the bridge arms of phases $A_1$, $B_1$, $C_1$, $X_1$, respectively, which satisfy:

$$\begin{cases} I_{\text{da}} = \dfrac{\sqrt{2}U_{\text{m}}\left[I_l \cos\varphi + I_{\text{x}} \cos(\delta_{\text{x}} + \varphi_{\text{x}})\right]}{2U_{\text{d}}} \\[3mm] I_{\text{db}} = \dfrac{\sqrt{2}U_{\text{m}}I_l \cos\varphi}{2U_{\text{d}}} \\[3mm] I_{\text{dc}} = \dfrac{\sqrt{2}U_{\text{m}}I_l \cos\varphi}{2U_{\text{d}}} \\[3mm] I_{\text{dx}} = \dfrac{\sqrt{2}U_{\text{xo}}I_{\text{x}} \cos(\delta_{\text{x}} - \delta_{\text{xo}} + \varphi_{\text{x}})}{2U_{\text{d}}} \end{cases}.$$

5. The system according to claim 4, wherein a value range of the phase angle $\delta_{\text{x}}$ of the voltage $u_{\text{xa}}(t)$ is:

$$\frac{5\pi}{6} \leq \delta_{\text{x}} \leq \frac{7\pi}{6}.$$

6. The system according to claim 4, wherein each voltage source submodule has a single-phase voltage source converter structure, and numbers $N_{\text{A}}$, $N_{\text{B}}$, $N_{\text{C}}$, $N_{\text{X}}$ of the voltage source submodules in the bridge arms with upper and lower in the phases A, B, C, and X of each four-port modular multilevel converter 4P-MMC respectively satisfy:

$$\begin{cases} N_{\text{A}}, N_{\text{B}}, N_{\text{C}} \geq \dfrac{\sqrt{2}(1+m)U_{\text{m}}}{mU_{\text{c}}} \\[3mm] N_{\text{X}} \geq \dfrac{\sqrt{2}(1+m_{\text{x}})U_{\text{xo}}}{m_{\text{x}}U_{\text{c}}} \end{cases}.$$

7. The system according to claim 4, k four-port modular multilevel converters 4P-MMC in the static power converter SPC have a same specification, and the currents of the bridge arms with upper and lower in respective phases of each four-port modular multilevel converter 4P-MMC are respectively expressed as:

$$\left\{ \begin{array}{l} i_{\mathrm{Ap,n}}\left(t\right)=\dfrac{\sqrt{6}mS\cos\varphi_{\mathrm{x}}}{12kU_{l}}+\dfrac{\sqrt{2}mS\cos\left(\delta_{\mathrm{x}}+\varphi_{\mathrm{x}}\right)}{4kU_{\mathrm{x}}} \\[4mm] \pm\left[\dfrac{\sqrt{6}S\cos\varphi_{\mathrm{x}}}{6kU_{l}\cos\varphi}\sin\left(\omega t+\varphi\right)+\dfrac{\sqrt{2}S}{2kU_{\mathrm{x}}}\sin\left(\omega t+\delta_{\mathrm{x}}+\varphi_{\mathrm{x}}\right)\right] \\[4mm] i_{\mathrm{Bp,n}}\left(t\right)=\dfrac{\sqrt{6}S\cos\varphi_{\mathrm{x}}}{6kU_{l}\cos\varphi}\left[\dfrac{m\cos\varphi}{2}\pm\sin\left(\omega t+\varphi-\dfrac{2\pi}{3}\right)\right] \\[4mm] i_{\mathrm{Cp,n}}\left(t\right)=\dfrac{\sqrt{6}S\cos\varphi_{\mathrm{x}}}{6kU_{l}\cos\varphi}\left[\dfrac{m\cos\varphi}{2}\pm\sin\left(\omega t+\varphi+\dfrac{2\pi}{3}\right)\right] \\[4mm] i_{\mathrm{Xp,n}}\left(t\right)=\dfrac{\sqrt{6}mS\cos\varphi_{\mathrm{x}}}{4kU_{l}}+\dfrac{\sqrt{2}mS\cos\left(\delta_{\mathrm{x}}+\varphi_{\mathrm{x}}\right)}{4kU_{\mathrm{x}}}\pm\dfrac{\sqrt{2}S}{2kU_{\mathrm{x}}}\sin\left(\omega t+\delta_{\mathrm{x}}+\varphi_{\mathrm{x}}\right) \end{array} \right. .$$

8. The system according to claim 7, wherein each phase of each four-port modular multilevel converter 4P-MMC in the static power converter SPC has a same modulation degree, which is $m=m_{\mathrm{x}}$.

**Patentansprüche**

1. Kontinuierliches, gleichphasiges Bahnstromversorgungssystem basierend auf einem modularen, mehrstufigen Umrichter mit vier Anschlüssen, umfassend eine Vielzahl von in Abständen angeordneten, kontinuierlichen, gleichphasigen Bahnstromunterwerken, wobei eine Quellseite jedes kontinuierlichen, gleichphasigen Bahnstromunterwerks an ein gleiches synchrones öffentliches Wechselstromnetz anschließbar ist und eine Bahnstromstromschiene an einer Lastseite jedes kontinuierlichen, gleichphasigen Bahnstromunterwerks an ein Oberleitungskontaktsystem T anschließbar ist, wobei alle kontinuierlichen, gleichphasigen Bahnstromunterwerke über das Oberleitungskontaktsystem T miteinander verbindbar sind;

jedes kontinuierliche, gleichphasige Bahnstromunterwerk einen ersten Bahnstromtransformator $T_1$, einen zweiten Bahnstromtransformator $T_2$, eine Vielzahl von Schaltern und einen statischen Leistungsumrichter SPC mit drei Eingangsanschlüssen Ac, Bc, Cc und einem Ausgangsanschluss Xc umfasst; der erste Bahnstromtransformator $T_1$ und der zweite Bahnstromtransformator $T_2$ jeder eine dreiphasige Transformatorstruktur aufweisen; primäre Anschlüsse der jeweiligen Phasen des ersten Bahnstromtransformators $T_1$ und des zweiten Bahnstromtransformators $T_2$ jeweils über dreiphasige Leistungsschalter CB1, CB2 an drei Phasen A, B und C des synchronen öffentlichen Wechselstromnetzes anschließbar sind, wobei die Phase A der Phase B um 120 Grad voreilt und die Phase A der Phase C um 120 Grad nacheilt, sekundäre Anschlüsse der jeweiligen Phasen des ersten Bahnstromtransformators $T_1$ und des zweiten Bahnstromtransformators $T_2$ jeweils über dreiphasige Leistungsschalter CB6 und CB7 mit drei Eingangsanschlüssen Ac, Bc und Cc des statischen Leistungsumrichters SPC verbunden sind, ein Ausgangsanschluss Xc des statischen Leistungsumrichters mit einer Bahnstromstromschiene T-Stromschiene verbunden ist, wobei die Bahnstromstromschiene T-Stromschiene über einen einphasigen Leistungsschalter CB3 mit dem Oberleitungskontaktsystem T verbindbar ist und eine Schiene über eine Rückleitung mit einem konzentrierten Erdungsanschluss des entsprechenden kontinuierlichen, gleichphasigen Bahnstromunterwerks verbunden ist; der konzentrierte Erdungsanschluss des kontinuierlichen, gleichphasigen Bahnstromunterwerks mit einem Eingangsanschluss des statischen Leistungsumrichters SPC verbunden ist, und der Eingangsanschluss des statischen Leistungsumrichters SPC, der mit dem konzentrierten Erdungsanschluss in jedem kontinuierlichen, gleichphasigen Bahnstromunterwerk verbunden ist, die gleiche Phasensystemanzahl aufweist; der statische Leistungsumrichter SPC aus k parallel geschalteten modularen, mehrstufigen Umrichtern mit vier Anschlüssen 4P-MMC besteht, wobei jeder modulare mehrstufige Umrichter mit vier Anschlüssen 4P-MMC vier Phasen A, B, C und X umfasst, die jeweils aus einem oberen und einem unteren Brückenzweig in Reihe bestehen, die Pluspole der oberen Brückenzweige der vier Phasen parallel zueinander geschaltet sind, um einen positiven Gleichstrompol DC+ zu bilden, und die Minuspole der unteren Brückenzweige der vier Phasen parallel zueinander geschaltet sind, um einen negativen Gleichstrompol DC- zu bilden, die Minuspole der oberen Brückenzweige der vier Phasen und die Pluspole der unteren Brückenzweige der vier Phasen jeweils als Mittelpunkte der jeweiligen Phasen in Reihe geschaltet sind; die Mittelpunkte der drei Phasen A, B und C jedes modularen, mehrstufigen Umrichters mit vier Anschlüssen 4P-MMC jeweils über einen dreiphasigen Leistungsschalter TB mit den entsprechenden Eingangsanschlüssen Ac, Bc und Cc des statischen Leistungsumrichters SPC verbunden sind, und der Mittelpunkt der Phase X jedes modularen, mehrstufigen Umrichters mit vier Anschlüssen 4P-MMC jeweils über einen einphasigen Leistungsschalter SB mit dem Ausgangsanschluss Xc des statischen Leistungsumrichters SPC verbunden ist;

wobei die primären Anschlüsse des ersten Bahnstromtransformators $T_1$ und des zweiten Bahnstromtransformators $T_2$ den gleichen Effektivwert $U_L$ der Nennleitungsspannung und Phasenwinkel der Leitungsspannungen mit einer Differenz von 120 Grad in Folge aufweisen; die sekundären Anschlüsse des ersten Bahnstromtransformators $T_1$ und des zweiten Bahnstromtransformators $T_2$ einen gleichen Effektivwert $U_l$ der Nennleitungsspannung und Phasenwinkel der Leitungsspannungen mit einer Differenz von 120 Grad in Folge aufweisen; ein Transformationsverhältnis jedes des ersten Bahnstromtransformators $T_1$ und des zweiten Bahnstromtransformators $T_2$ $K_T$ ist, welches wie folgt ist:

$$K_t = U_l / U_L \cdot$$

2. System nach Anspruch 1, wobei jedes kontinuierliche, gleichphasige Bahnstromunterwerk ferner einen einphasigen Ausgangstransformator $T_o$ umfasst, ein Anschluss $P_1$ einer Primärwicklung des einphasigen Ausgangstransformators $T_o$ mit dem Ausgangsanschluss Xc des statischen Leistungsumrichters SPC in dem entsprechenden kontinuierlichen, gleichphasigen Bahnunterwerk verbunden ist, jeder Eingangsanschluss des statischen Leistungsumrichters SPC mit dem anderen Anschluss $P_0$ der Primärwicklung des einphasigen Ausgangstransformators $T_o$ über einen Leistungsschalter CB4 verbunden ist und der Eingangsanschluss des statischen Leistungswandlers SPC, der mit dem Anschluss $P_0$ der Primärwicklung des einphasigen Ausgangstransformators $T_o$ verbunden ist, in jedem kontinuierlichen, gleichphasigen Bahnstromunterwerk die gleiche Phasensystemanzahl aufweist; ein Anschluss $S_1$ einer Sekundärwicklung des einphasigen Ausgangstransformators $T_o$ über einen einphasigen Leistungsschalter CB5 mit der Bahnstromstromschiene T-Stromschiene verbunden ist, und der andere Anschluss $S_0$ der Sekundärwicklung des einphasigen Ausgangstransformators $T_o$ mit dem konzentrierten Erdungsanschluss in dem entsprechenden kontinuierlichen, gleichphasigen Bahnunterwerk verbunden ist;

wobei eine sekundärseitige Nennspannung des einphasigen Ausgangstransformators $T_o$ und eine Nennspannung der Bahnstromstromschiene T-Stromschiene gleich sind, ein Effektivwert davon als $U_o$ bezeichnet wird, eine primärseitige Nennspannung des einphasigen Ausgangstransformators $T_o$ und eine Anschlussspannung des Ausgangsanschlusses Xc des entsprechenden statischen Leistungswandlers SPC gleich sind, und ein Effektivwert davon als $U_x$ bezeichnet wird, ein Transformationsverhältnis $K_o$ des einphasigen Ausgangstransformators $T_o$ wie folgt ist:

$$K_o = U_o / U_x \cdot$$

3. System nach Anspruch 1 oder 2, wobei in jeder Phase des modularen, mehrstufigen Umrichters mit vier Anschlüssen 4P-MMC der obere Brückenzweig und der untere Brückenzweig die gleiche Struktur aufweisen, die eine Vielzahl von Spannungsquellensubmodulen und eine Filterinduktivität in Reihe umfassen; im oberen Brückenzweig ein positiver Anschluss eines ersten der Spannungsquellensubmodule und ein Anschluss der Filterinduktivität als positiver Anschluss bzw. negativer Anschluss des oberen Brückenzweigs verwendet werden; im unteren Brückenzweig ein Anschluss der Filterinduktivität und ein negativer Anschluss eines letzten der Spannungsquellensubmodule als positiver Anschluss bzw. negativer Anschluss des unteren Brückenzweigs verwendet werden.

4. System nach Anspruch 3, wobei ein Effektivwert der Nennspannung des Oberleitungskontaktsystems T als $U_o$ bezeichnet wird, ein Effektivwert der Nennleitungsspannung des an das synchrone öffentliche Wechselstromnetz anschließbaren, kontinuierlichen, gleichphasigen Bahnstromunterwerks als $U_L$ bezeichnet wird, und eine Nennscheinleistung und ein Leistungsfaktorwinkel einer Bahnstromlast jedes kontinuierlichen, gleichphasigen Bahnstromunterwerks jeweils als $S$ und $\varphi_x$ bezeichnet werden; das kontinuierliche, gleichphasige Bahnstromunterwerk Anschlüsse des synchronen öffentlichen Wechselstromnetzes mit einem Mitsystemstrom speist, und ein Leistungsfaktorwinkel eines nahegelegenen Anschlusses als $\varphi$ bezeichnet wird, wobei der Leistungsfaktorwinkel ebenso positiv ist, wenn eine Spannung einem Strom nacheilt; der konzentrierte Erdungsanschluss mit einem Eingangsanschluss Ac des statischen Leistungsumrichters SPC verbunden ist, und zwar sind der Eingangsanschluss Ac und der sekundäre Anschluss jedes Bahnstromtransformators, verbunden mit dem Eingangsanschluss Ac, beide als Referenzstufe, wobei eine Hauptkennlinie der elektrischen Größe des statischen Leistungsumrichters SPC wie folgt festgelegt ist:

Spannungen der Eingangsanschlüsse Ac, Bc, Cc und der Ausgangsanschlüsse Xc des statischen Leistungsumrichters SPC, d. h. die Spannungen $u_{aa}(t)$, $u_{ba}(t)$, $u_{ca}(t)$ und $u_{xa}(t)$ der Wechselstromanschlüsse der Phasen A, B, C und X von jedem modularen, mehrstufigen Umrichter mit vier Anschlüssen 4P-MMC werden jeweils ausgedrückt als:

$$
\begin{cases}
u_{aa}(t) = 0 \\
u_{ba}(t) = \sqrt{2}U_l \sin(\omega t - \dfrac{5\pi}{6}) \\
u_{ca}(t) = \sqrt{2}U_l \sin(\omega t + \dfrac{5\pi}{6}) \\
u_{xa}(t) = \sqrt{2}U_x \sin(\omega t + \delta_x)
\end{cases}
$$

wobei $\omega$ eine Winkelfrequenz des synchronen öffentlichen Wechselstromnetzes ist, *t eine* Systembetriebszeit ist, $U_l$ der Effektivwert der Nennleitungsspannung zwischen den sekundären Anschlüssen des ersten Bahnstromtransformators $T_1$ und des zweiten Bahnstromtransformators $T_2$ ist, und $U_x$ ein Effektivwert der Spannung $u_{xa}$ des Ausgangsanschlusses Xc des statischen Leistungswandlers SPC ist, $\delta_x$ ein Phasenwinkel der Spannung $u_{xa}(t)$ ist, der als positiv genommen wird, wenn ein Referenzspannungszeiger $\dot{U}_{oa}$ voreilt;

ein Effektivwert $U_m$ einer Wechselstromkomponente einer Spannung des Brückenzweigs mit oberem und unterem in jeder der Phasen A, B und C jedes modularen, mehrstufigen Umrichters mit vier Anschlüssen 4P-MMC ist:

$$
U_m = \frac{\sqrt{3}}{3}U_l
$$

eine Nenngleichspannung $U_D$ zwischen dem Gleichspannungs-Pluspol DC+ und dem Gleichspannungs-Minuspol DC- jedes modularen, mehrstufigen Umrichters mit vier Anschlüssen 4P-MMC wie folgt ist:

$$
U_d = \frac{2\sqrt{2}U_m}{m}
$$

wobei m ein Modulationsgrad der drei Phasen A, B und C jedes modularen, mehrstufigen Umrichters mit vier Anschlüssen 4P-MMC ist;

ein Effektivwert $U_{xo}$ und ein Phasenwinkel $\delta_{xo}$ einer Wechselstromkomponente einer Spannung des Brückenzweigs mit oberem und unterem in der Phase X jedes modularen, mehrstufigen Umrichters mit vier Anschlüssen 4P-MMC jeweils wie folgt sind:

$$
\begin{cases}
U_{xo} = \sqrt{U_m^2 + U_x^2 + 2U_m U_x \cos\delta_x} \\
\delta_{xo} = \pi - \sin^{-1}\dfrac{U_x \sin\delta_x}{U_{xo}}
\end{cases}
$$

ein Modulationsgrad $m_x$ der Phase X jedes modularen, mehrstufigen Umrichters mit vier Anschlüssen 4P-MMC wie folgt ist:

$$
m_x = \frac{2\sqrt{2}U_{xo}}{U_d}
$$

Spannungen der oberen und unteren Zweige der Phasen A, B, C und X jedes modularen, mehrstufigen Umrichters mit vier Anschlüssen 4P-MMC jeweils wie folgt sind:

$$\begin{cases} u_{\text{Ap,n}}\left(t\right) = \dfrac{U_{\text{d}}}{2} \mp \sqrt{2}U_{\text{m}}\sin\omega t \\[2mm] u_{\text{Bp,n}}\left(t\right) = \dfrac{U_{\text{d}}}{2} \mp \sqrt{2}U_{\text{m}}\sin(\omega t - \dfrac{2\pi}{3}) \\[2mm] u_{\text{Cp,n}}\left(t\right) = \dfrac{U_{\text{d}}}{2} \mp \sqrt{2}U_{\text{m}}\sin(\omega t + \dfrac{2\pi}{3}) \\[2mm] u_{\text{Xp,n}}\left(t\right) = \dfrac{U_{\text{d}}}{2} \mp \sqrt{2}U_{\text{xo}}\sin(\omega t + \delta_{\text{xo}}) \end{cases}$$

ein Strom des sekundären Anschlusses jeder der Phasen A, B und C des ersten Bahnstromtransformators $T_1$ oder des zweiten Bahnstromtransformators $T_2$ ein symmetrischer Mitsystemstrom mit einem Effektivwert von $I_l$ ist, ein Effektivwert eines Stroms des sekundären Anschlusses der Phase X des ersten Bahnstromtransformators $T_1$ oder des zweiten Bahnstromtransformators $T_2$ $I_x$ ist, die jeweils erfüllen:

$$\begin{cases} I_l = \dfrac{S\cos\varphi_{\text{x}}}{\sqrt{3}U_l\cos\varphi} \\[4mm] I_{\text{x}} = \dfrac{S}{U_{\text{x}}} \end{cases}$$

Ströme $i_a(t)$, $i_b(t)$, $i_c(t)$, $i_x(t)$ der Wechselstromanschlüsse der Phasen A, B, C und X jedes modularen, mehrstufigen Umrichters mit vier Anschlüssen 4P-MMC jeweils wie folgt sind:

$$\begin{cases} i_{\text{a}}\left(t\right) = \sqrt{2}I_l\sin(\omega t + \varphi) + \sqrt{2}I_{\text{x}}\sin(\omega t + \delta_{\text{x}} + \varphi_{\text{x}}) \\[2mm] i_{\text{b}}\left(t\right) = \sqrt{2}I_l\sin(\omega t + \varphi - \dfrac{2\pi}{3}) \\[2mm] i_{\text{c}}\left(t\right) = \sqrt{2}I_l\sin(\omega t + \varphi + \dfrac{2\pi}{3}) \\[2mm] i_{\text{x}}\left(t\right) = \sqrt{2}I_{\text{x}}\sin(\omega t + \delta_{\text{x}} + \varphi_{\text{x}}) \end{cases}$$

Ströme der Brückenzweige mit oberem und unterem der Phasen A, B, C und X jedes modularen, mehrstufigen Umrichters mit vier Anschlüssen 4P-MMC jeweils wie folgt sind:

$$\begin{cases} i_{\mathrm{Ap,n}}\left(t\right) = I_{\mathrm{da}} \pm \dfrac{i_{\mathrm{a}}(t)}{2} \\[2ex] i_{\mathrm{Bp,n}}\left(t\right) = I_{\mathrm{db}} \pm \dfrac{i_{\mathrm{b}}(t)}{2} \\[2ex] i_{\mathrm{Cp,n}}\left(t\right) = I_{\mathrm{dc}} \pm \dfrac{i_{\mathrm{c}}(t)}{2} \\[2ex] i_{\mathrm{Xp,n}}\left(t\right) = I_{\mathrm{dx}} \pm \dfrac{i_{\mathrm{x}}(t)}{2} \end{cases}$$

wobei $I_{\mathrm{da}}$, $I_{\mathrm{db}}$, $I_{\mathrm{dc}}$, $I_{\mathrm{dx}}$ Gleichstromkomponenten der Ströme der Brückenzweige der Phasen $A_1$, $B_1$, $C_1$ bzw. $X_1$ sind, die folgende Bedingungen erfüllen:

$$\begin{cases} I_{\mathrm{da}} = \dfrac{\sqrt{2}U_{\mathrm{m}}\left[I_l\cos\varphi + I_{\mathrm{x}}\cos\left(\delta_{\mathrm{x}}+\varphi_{\mathrm{x}}\right)\right]}{2U_{\mathrm{d}}} \\[2.5ex] I_{\mathrm{db}} = \dfrac{\sqrt{2}U_{\mathrm{m}}I_l\cos\varphi}{2U_{\mathrm{d}}} \\[2.5ex] I_{\mathrm{dc}} = \dfrac{\sqrt{2}U_{\mathrm{m}}I_l\cos\varphi}{2U_{\mathrm{d}}} \\[2.5ex] I_{\mathrm{dx}} = \dfrac{\sqrt{2}U_{\mathrm{xo}}I_{\mathrm{x}}\cos\left(\delta_{\mathrm{x}}-\delta_{\mathrm{xo}}+\varphi_{\mathrm{x}}\right)}{2U_{\mathrm{d}}} \end{cases}.$$

5. System nach Anspruch 4, wobei ein Wertebereich des Phasenwinkels $\delta_{\mathrm{x}}$ der Spannung $u_{\mathrm{xa}}(t)$ wie folgt ist:

$$\frac{5\pi}{6} \leq \delta_{\mathrm{x}} \leq \frac{7\pi}{6}.$$

6. System nach Anspruch 4, wobei jedes Spannungsquellensubmodul eine einphasige Spannungsquellenumrichterstruktur aufweist, und Zahlen $N_{\mathrm{A}}$, $N_{\mathrm{B}}$, Nc, $N_{\mathrm{X}}$ der Spannungsquellensubmodule in den Brückenzweigen mit oberem und unterem in den Phasen A, B, C und X jedes modularen, mehrstufigen Umrichters mit vier Anschlüssen 4P-MMC jeweils Folgendes erfüllen:

$$\begin{cases} N_{\mathrm{A}}, N_{\mathrm{B}}, N_{\mathrm{C}} \geq \dfrac{\sqrt{2}\left(1+m\right)U_{\mathrm{m}}}{mU_{\mathrm{c}}} \\[2.5ex] N_{\mathrm{X}} \geq \dfrac{\sqrt{2}\left(1+m_{\mathrm{x}}\right)U_{\mathrm{xo}}}{m_{\mathrm{x}}U_{\mathrm{c}}} \end{cases}.$$

7. System nach Anspruch 4, k modulare mehrstufige Umrichter mit vier Anschlüssen 4P-MMC in dem statischen Leistungsumrichter SPC weisen die gleiche Spezifikation auf, und die Ströme der Brückenzweige mit oberem und unterem in den jeweiligen Phasen jedes modularen, mehrstufigen Umrichters mit vier Anschlüssen 4P-MMC werden jeweils wie folgt ausgedrückt:

$$
\begin{cases}
i_{\mathrm{Ap,n}}\left(t\right) = \dfrac{\sqrt{6}\,mS\cos\varphi_{\mathrm{x}}}{12kU_{l}} + \dfrac{\sqrt{2}\,mS\cos\left(\delta_{\mathrm{x}}+\varphi_{\mathrm{x}}\right)}{4kU_{\mathrm{x}}} \\[2mm]
\qquad \pm\left[\dfrac{\sqrt{6}\,S\cos\varphi_{\mathrm{x}}}{6kU_{l}\cos\varphi}\sin\left(\omega t+\varphi\right) + \dfrac{\sqrt{2}\,S}{2kU_{\mathrm{x}}}\sin\left(\omega t+\delta_{\mathrm{x}}+\varphi_{\mathrm{x}}\right)\right] \\[3mm]
i_{\mathrm{Bp,n}}\left(t\right) = \dfrac{\sqrt{6}\,S\cos\varphi_{\mathrm{x}}}{6kU_{l}\cos\varphi}\left[\dfrac{m\cos\varphi}{2}\pm\sin\left(\omega t+\varphi-\dfrac{2\pi}{3}\right)\right] \\[3mm]
i_{\mathrm{Cp,n}}\left(t\right) = \dfrac{\sqrt{6}\,S\cos\varphi_{\mathrm{x}}}{6kU_{l}\cos\varphi}\left[\dfrac{m\cos\varphi}{2}\pm\sin\left(\omega t+\varphi+\dfrac{2\pi}{3}\right)\right] \\[3mm]
i_{\mathrm{Xp,n}}\left(t\right) = \dfrac{\sqrt{6}\,mS\cos\varphi_{\mathrm{x}}}{4kU_{l}} + \dfrac{\sqrt{2}\,mS\cos\left(\delta_{\mathrm{x}}+\varphi_{\mathrm{x}}\right)}{4kU_{\mathrm{x}}} \pm \dfrac{\sqrt{2}\,S}{2kU_{\mathrm{x}}}\sin\left(\omega t+\delta_{\mathrm{x}}+\varphi_{\mathrm{x}}\right)
\end{cases}
$$

**8.** System nach Anspruch 7, wobei jede Phase jedes modularen, mehrstufigen Umrichters mit vier Anschlüssen 4P-MMC in dem statischen Leistungsumrichter SPC den gleichen Modulationsgrad aufweist, der m = $m_{\mathrm{x}}$ ist.

**Revendications**

**1.** Système d'alimentation en énergie de traction cophasé continu basé sur un convertisseur multiniveau modulaire à quatre ports, comprenant une pluralité de sous-stations de traction cophasées continues agencées à intervalles, dans lequel un côté source de chaque sous-station de traction cophasée continue est connectable à un même réseau électrique public synchrone à courant alternatif, et un bus de traction au niveau d'un côté charge de chaque sous-station de traction cophasée continue est connectable à un système à ligne de contact aérienne T, toutes les sous-stations de traction cophasées continues sont connectables les unes aux autres par l'intermédiaire du système à ligne de contact aérienne T ;

chaque sous-station de traction cophasée continue comprend un premier transformateur de traction $T_1$, un second transformateur de traction $T_2$, une pluralité de commutateurs et un convertisseur de puissance statique, SPC, avec trois ports d'entrée, Ac, Bc, Cc et un port de sortie, Xc ; le premier transformateur de traction $T_1$ et le second transformateur de traction $T_2$ présentent chacun une structure de transformateur triphasée ; les ports primaires des phases respectives du premier transformateur de traction $T_1$ et du second transformateur de traction $T_2$ sont respectivement connectables à trois phases A, B et C du réseau électrique public synchrone à courant alternatif par l'intermédiaire de disjoncteurs triphasés, CB1, CB2, dans lequel la phase A est en avance sur la phase B de 120 degrés et la phase A est en retard sur la phase C de 120 degrés, les ports secondaires des phases respectives du premier transformateur de traction $T_1$ et du second transformateur de traction $T_2$ sont respectivement connectés à trois ports d'entrée Ac, Bc et Cc du convertisseur de puissance statique, SPC par l'intermédiaire des disjoncteurs triphasés CB6 et CB7, un port de sortie Xc du convertisseur de puissance statique est connecté à un bus de traction, T-bus, le bus de traction T-bus est connectable au système à ligne de contact aérienne T par l'intermédiaire d'un disjoncteur monophasé CB3, et un rail est connecté à une borne de terre concentrée de la sous-station de traction cophasée continue correspondante par l'intermédiaire d'une ligne de retour ; la borne de terre concentrée de la sous-station de traction cophasée continue est connectée à un port d'entrée du convertisseur de puissance statique SPC, et le port d'entrée du convertisseur de puissance statique SPC connecté à la borne de terre concentrée dans chaque sous-station de traction cophasée continue présente un même numéro de séquence de phase ; le convertisseur de puissance statique SPC comprend k convertisseurs modulaires multiniveaux à quatre ports, 4P-MMC, en parallèle, chaque convertisseur modulaire multiniveau à quatre ports, 4P-MMC, comprend quatre phases A, B, C et X comprenant chacune un bras de pont supérieur et un bras de pont inférieur en série, les bornes positives des bras de pont supérieurs des quatre phases sont connectées en parallèle les unes avec les autres pour former un pôle positif à courant continu, CC+, et des pôles négatifs des bras de pont inférieurs des quatre phases sont connectés en parallèle les uns avec les autres pour former un pôle négatif à courant continu, CC-, les bornes négatives des bras de pont supérieurs des quatre phases et les bornes positives des bras de pont inférieurs des quatre phases sont respectivement connectées en série comme points médians des phases respectives ; les points médians des trois phases A, B et C de chaque convertisseur modulaire multiniveau à quatre ports, 4P-MMC sont respectivement connectés aux ports d'entrée correspondants Ac, Bc et Cc du convertisseur de puissance statique, SPC par l'intermédiaire d'un disjoncteur triphasé, TB, et le point médian de la phase X de chaque convertisseur modulaire multiniveau à quatre ports, 4P-MMC est respectivement connecté au port de sortie Xc du convertisseur de puissance statique SPC par l'intermédiaire d'un disjoncteur monophasé SB ;

dans lequel les ports primaires du premier transformateur de traction $T_1$ et du second transformateur de traction $T_2$ présentent une même valeur effective $U_L$ de tension de ligne nominale, et des angles de phase des tensions de ligne avec une différence de 120 degrés dans l'ordre ; les ports secondaires du premier transformateur de traction $T_1$ et du second transformateur de traction $T_2$ présentent une même valeur effective $U_l$ de tension de ligne nominale, et des angles de phase des tensions de ligne avec une différence de 120 degrés dans l'ordre ; un rapport de transformation de chacun du premier transformateur de traction $T_1$ et du second transformateur de traction $T_2$ est $K_T$, c'est-à-dire :

$$K_T = U_l/U_L.$$

2. Système selon la revendication 1, dans lequel chaque sous-station de traction cophasée continue comprend en outre un transformateur de sortie monophasé $T_o$, un port $P_1$ d'un enroulement primaire du transformateur de sortie monophasé $T_o$ est connecté au port de sortie Xc du convertisseur de puissance statique SPC dans la sous-station de traction cophasée continue correspondante, tout port d'entrée du convertisseur de puissance statique SPC est connecté à l'autre port $P_0$ de l'enroulement primaire du transformateur de sortie monophasé $T_o$ par l'intermédiaire d'un disjoncteur CB4, et le port d'entrée du convertisseur de puissance statique SPC connecté au port $P_0$ de l'enroulement primaire du transformateur de sortie monophasé $T_o$ dans chaque sous-station de traction triphasée continue présente un même numéro de séquence de phase ; un port $S_1$ d'un enroulement secondaire du transformateur de sortie monophasé $T_o$ est connecté au bus de traction, T-bus, par l'intermédiaire d'un disjoncteur monophasé CB5, et l'autre port $S_0$ de l'enroulement secondaire du transformateur de sortie monophasé $T_o$ est connecté à la borne de terre concentrée dans la sous-station de traction cophasée continue correspondante ;

dans lequel une tension nominale côté secondaire du transformateur de sortie monophasé $T_o$ et une tension nominale du bus de traction, T-bus, sont les mêmes, dont une valeur effective est désignée par $U_o$, une tension nominale côté primaire du transformateur de sortie monophasé $T_o$ et une tension de port du port de sortie, Xc, du convertisseur de puissance statique, SPC, correspondant sont les mêmes, et dont une valeur effective est désignée par $U_x$, un rapport de transformation $K_o$ du transformateur de sortie monophasé $T_o$ est :

$$K_o = U_o/U_x.$$

3. Système selon la revendication 1 ou 2, dans lequel dans chaque phase du convertisseur modulaire multiniveau à quatre ports, 4P-MMC, le bras de pont supérieur et le bras de pont inférieur présentent une même structure, comprenant une pluralité de sous-modules de source de tension et un inducteur de filtrage en série ; dans le bras de pont supérieur, une borne positive d'un premier des sous-modules de source de tension et une borne de l'inducteur de filtrage sont considérées respectivement comme une borne positive et une borne négative du bras de pont supérieur ; dans le bras de pont inférieur, une borne de l'inducteur de filtrage et une borne négative d'un dernier sous-module de source de tension sont considérées respectivement comme une borne positive et une borne négative du bras de pont inférieur.

4. Système selon la revendication 3, dans lequel une valeur effective de tension nominale du système à ligne de contact aérienne T est désignée par $U_o$, une valeur effective de tension de ligne nominale de la sous-station de traction cophasée continue connectable au réseau électrique public synchrone à courant alternatif est désignée par $U_L$, et une capacité apparente nominale et un angle de facteur de puissance d'une charge de traction de chaque sous-station de traction cophasée continue sont respectivement désignés par S et $\varphi_x$ ; la sous-station de traction cophasée continue injecte dans les ports du réseau électrique public synchrone à courant alternatif un courant de séquence positif, et un angle de facteur de puissance d'un port d'extrémité proche est désigné par $\varphi$, l'angle de facteur de puissance étant positif avec une tension en retard par rapport à un courant ; la borne de terre concentrée est connectée à un port d'entrée Ac du convertisseur de puissance statique, SPC, à savoir, le port d'entrée Ac et le port secondaire de chaque transformateur de traction connecté au port d'entrée Ac sont tous deux comme un niveau de référence, une caractéristique de quantité électrique principale du convertisseur de puissance statique, SPC, est définie comme suit : des tensions des ports d'entrée Ac, Bc, Cc et les ports de sortie Xc du convertisseur de puissance statique, SPC, à savoir des tensions $u_{aa}(t)$, $u_{ba}(t)$, $n_{ca}(t)$ et $u_{xa}(t)$ des ports à courant alternatif des phases A, B, C et X de chaque convertisseur modulaire multiniveau à quatre ports, 4P-MMC sont respectivement exprimées comme suit :

$$\begin{cases} u_{aa}(t) = 0 \\ u_{ba}(t) = \sqrt{2}U_l \sin(\omega t - \dfrac{5\pi}{6}) \\ u_{ca}(t) = \sqrt{2}U_l \sin(\omega t + \dfrac{5\pi}{6}) \\ u_{xa}(t) = \sqrt{2}U_x \sin(\omega t + \delta_x) \end{cases}$$

où, $\omega$ est une fréquence angulaire du réseau électrique public synchrone à courant alternatif, $t$ est un temps de fonctionnement du système, $U_l$ est la valeur effective de la tension de ligne nominale entre les ports secondaires du premier transformateur de traction $T_1$ et du second transformateur de traction $T_2$, et $U_x$ est une valeur effective de la tension $u_{xa}$ du port de sortie Xc du convertisseur statique de puissance SPC, $\delta_x$ est un angle de phase de la tension $u_{xa}(t)$, pris comme positif en avant d'un phaseur de tension de référence $U_{oa}$ ;
une valeur effective $U_m$ d'une composante à courant alternatif d'une tension du bras de pont supérieur et inférieur dans chacune des phases A, B et C de chaque convertisseur modulaire multiniveau à quatre ports, 4P-MMC est :

$$U_m = \frac{\sqrt{3}}{3}U_l$$

une tension continue nominale $U_d$ entre le pôle positif à courant continu, CC+, et le pôle négatif à courant continu, DC-, de chaque convertisseur modulaire multiniveau à quatre ports, 4P-MMC est :

$$U_d = \frac{2\sqrt{2}U_m}{m}$$

où m est le degré de modulation des trois phases A, B et C de chaque convertisseur modulaire multiniveau à quatre ports, 4P-MMC ;
une valeur effective $U_{xo}$ et un angle de phase $\delta_{xo}$ d'une composante à courant alternatif d'une tension du bras de pont supérieur et inférieur dans la phase X de chaque convertisseur modulaire multiniveau à quatre ports, 4P-MMC sont respectivement :

$$\begin{cases} U_{xo} = \sqrt{U_m^2 + U_x^2 + 2U_mU_x\cos\delta_x} \\ \delta_{xo} = \pi - \sin^{-1}\dfrac{U_x\sin\delta_x}{U_{xo}} \end{cases}$$

un degré de modulation $m_x$ de la phase X de chaque convertisseur modulaire multiniveau à quatre ports, 4P-MMC est :

$$m_x = \frac{2\sqrt{2}U_{xo}}{U_d}$$

des tensions des bras supérieur et inférieur des phases A, B, C et X de chaque convertisseur modulaire multiniveau à quatre ports, 4P-MMC, sont respectivement :

27

$$\begin{cases} u_{\text{Ap,n}}\left(t\right) = \dfrac{U_{\text{d}}}{2} \mp \sqrt{2}U_{\text{m}} \sin \omega t \\[2mm] u_{\text{Bp,n}}\left(t\right) = \dfrac{U_{\text{d}}}{2} \mp \sqrt{2}U_{\text{m}} \sin(\omega t - \dfrac{2\pi}{3}) \\[2mm] u_{\text{Cp,n}}\left(t\right) = \dfrac{U_{\text{d}}}{2} \mp \sqrt{2}U_{\text{m}} \sin(\omega t + \dfrac{2\pi}{3}) \\[2mm] u_{\text{Xp,n}}\left(t\right) = \dfrac{U_{\text{d}}}{2} \mp \sqrt{2}U_{\text{xo}} \sin(\omega t + \delta_{\text{xo}}) \end{cases}$$

un courant du port secondaire de chacune des phases A, B et C du premier transformateur de traction $T_1$ ou du second transformateur de traction $T_2$ est un courant symétrique de séquence positive, avec une valeur effective de $I_l$, une valeur effective d'un courant du port secondaire de la phase X du premier transformateur de traction $T_1$ ou du second transformateur de traction $T_2$ est $I_x$, qui satisfont respectivement :

$$\begin{cases} I_l = \dfrac{S\cos\varphi_{\text{x}}}{\sqrt{3}U_l \cos\varphi} \\[4mm] I_{\text{x}} = \dfrac{S}{U_{\text{x}}} \end{cases}$$

des courants $i_a(t)$, $i_b(t)$, $i_c(t)$, $i_x(t)$ des ports CA des phases A, B, C et X de chaque convertisseur modulaire multiniveau à quatre ports 4P-MMC sont respectivement :

$$\begin{cases} i_{\text{a}}\left(t\right) = \sqrt{2}I_l \sin(\omega t + \varphi) + \sqrt{2}I_{\text{x}} \sin(\omega t + \delta_{\text{x}} + \varphi_{\text{x}}) \\[2mm] i_{\text{b}}\left(t\right) = \sqrt{2}I_l \sin(\omega t + \varphi - \dfrac{2\pi}{3}) \\[2mm] i_{\text{c}}\left(t\right) = \sqrt{2}I_l \sin(\omega t + \varphi + \dfrac{2\pi}{3}) \\[2mm] i_{\text{x}}\left(t\right) = \sqrt{2}I_{\text{x}} \sin(\omega t + \delta_{\text{x}} + \varphi_{\text{x}}) \end{cases}$$

des courants des bras de pont supérieur et inférieur dans les phases A, B, C et X de chaque convertisseur modulaire multiniveau à quatre ports, 4P-MMC, sont respectivement :

$$\begin{cases} i_{\text{Ap,n}}\left(t\right) = I_{\text{da}} \pm \dfrac{i_{\text{a}}(t)}{2} \\[2mm] i_{\text{Bp,n}}\left(t\right) = I_{\text{db}} \pm \dfrac{i_{\text{b}}(t)}{2} \\[2mm] i_{\text{Cp,n}}\left(t\right) = I_{\text{dc}} \pm \dfrac{i_{\text{c}}(t)}{2} \\[2mm] i_{\text{Xp,n}}\left(t\right) = I_{\text{dx}} \pm \dfrac{i_{\text{x}}(t)}{2} \end{cases}$$

où, $I_{\text{da}}$, $I_{\text{db}}$, $I_{\text{dc}}$, $I_{\text{dx}}$ sont des composantes à courant direct des courants des bras de pont des phases $A_1$, $B_1$, $C_1$, $X_1$,

respectivement, qui satisfont :

$$\left\{ \begin{array}{l} I_{da} = \dfrac{\sqrt{2}U_{m}\left[I_{l}\cos\varphi + I_{x}\cos\left(\delta_{x}+\varphi_{x}\right)\right]}{2U_{d}} \\[4mm] I_{db} = \dfrac{\sqrt{2}U_{m}I_{l}\cos\varphi}{2U_{d}} \\[4mm] I_{dc} = \dfrac{\sqrt{2}U_{m}I_{l}\cos\varphi}{2U_{d}} \\[4mm] I_{dx} = \dfrac{\sqrt{2}U_{xo}I_{x}\cos\left(\delta_{x}-\delta_{xo}+\varphi_{x}\right)}{2U_{d}} \end{array} \right. .$$

5. Système selon la revendication 4, dans lequel une plage de valeurs de l'angle de phase $\delta_x$ de la tension $u_{xa}(t)$ est :

$$\frac{5\pi}{6} \le \delta_x \le \frac{7\pi}{6} .$$

6. Système selon la revendication 4, dans lequel chaque sous-module de source de tension présente une structure de convertisseur de source de tension monophasé, et des nombres $N_A$, $N_B$, Nc, $N_X$ des sous-modules de source de tension dans les bras de pont supérieur et inférieur dans les phases A, B, C, et X de chaque convertisseur modulaire multiniveau à quatre ports, 4P-MMC, satisfont respectivement :

$$\left\{ \begin{array}{l} N_A, N_B, N_C \ge \dfrac{\sqrt{2}\left(1+m\right)U_m}{mU_c} \\[4mm] N_X \ge \dfrac{\sqrt{2}\left(1+m_x\right)U_{xo}}{m_x U_c} \end{array} \right. .$$

7. Système selon la revendication 4, $k$ des convertisseurs modulaires multiniveaux à quatre ports, 4P-MMC dans le convertisseur de puissance statique, SPC, présentent une même spécification, et les courants des bras de pont supérieur et inférieur dans les phases respectives de chaque convertisseur modulaire multiniveau à quatre ports, 4P-MMC, sont respectivement exprimés comme suit :

$$\begin{cases} i_{\mathrm{Ap,n}}\left(t\right)=\dfrac{\sqrt{6}mS\cos\varphi_{\mathrm{x}}}{12kU_{l}}+\dfrac{\sqrt{2}mS\cos\left(\delta_{\mathrm{x}}+\varphi_{\mathrm{x}}\right)}{4kU_{\mathrm{x}}} \\[3mm] \pm\left[\dfrac{\sqrt{6}S\cos\varphi_{\mathrm{x}}}{6kU_{l}\cos\varphi}\sin\left(\omega t+\varphi\right)+\dfrac{\sqrt{2}S}{2kU_{\mathrm{x}}}\sin\left(\omega t+\delta_{\mathrm{x}}+\varphi_{\mathrm{x}}\right)\right] \\[3mm] i_{\mathrm{Bp,n}}\left(t\right)=\dfrac{\sqrt{6}S\cos\varphi_{\mathrm{x}}}{6kU_{l}\cos\varphi}\left[\dfrac{m\cos\varphi}{2}\pm\sin\left(\omega t+\varphi-\dfrac{2\pi}{3}\right)\right] \\[3mm] i_{\mathrm{Cp,n}}\left(t\right)=\dfrac{\sqrt{6}S\cos\varphi_{\mathrm{x}}}{6kU_{l}\cos\varphi}\left[\dfrac{m\cos\varphi}{2}\pm\sin\left(\omega t+\varphi+\dfrac{2\pi}{3}\right)\right] \\[3mm] i_{\mathrm{Xp,n}}\left(t\right)=\dfrac{\sqrt{6}mS\cos\varphi_{\mathrm{x}}}{4kU_{l}}+\dfrac{\sqrt{2}mS\cos\left(\delta_{\mathrm{x}}+\varphi_{\mathrm{x}}\right)}{4kU_{\mathrm{x}}}\pm\dfrac{\sqrt{2}S}{2kU_{\mathrm{x}}}\sin\left(\omega t+\delta_{\mathrm{x}}+\varphi_{\mathrm{x}}\right) \end{cases}\qquad.$$

8. Système selon la revendication 7, dans lequel chaque phase de chaque convertisseur modulaire multiniveau à quatre ports, 4P-MMC, dans le convertisseur de puissance statique, SPC présente un même degré de modulation, qui est $m=m_x$.

FIG. 1

FIG. 2

FIG. 3

FIG. 4

(a) upper bridge arm          (b) lower bridge arm

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202010261430
- WO 201611056799 A
- WO 201310227591 A
- WO 201010596433X A
- WO 201010597237 A
- WO 201811313066 A
- WO 200710175253 A

### Non-patent literature cited in the description

- **I. KRASTEV ; P. TRICOLI ; S. HILLMANSEN ; M. CHEN**. Future of Electric Railways: Advanced Electrification Systems with Static Converters for ac Railways. *IEEE Electrification Magazine*, September 2016, vol. 4 (3), 6-14
- **WINKELNKEMPER M ; KORN A ; STEIMER P**. A modular direct converter for transformerless rail interties [A. *IEEE International Symposium on Industrial Electronics [C*, 2010, 562-567
- **NAMI, A. et al.** Modular Multilevel Converters for HVDC Applications: Review on Converter Cells and Functionalities. *IEEE Transactions on Power Electronics*, 2015, vol. 30 (1), 18-36